(19) Europäisches Patentamt
European Patent Office
Office européen des brevets

(11) **EP 3 347 978 B1**

(12) **EUROPÄISCHE PATENTSCHRIFT**

(45) Veröffentlichungstag und Bekanntmachung des Hinweises auf die Patenterteilung:
**27.03.2019 Patentblatt 2019/13**

(21) Anmeldenummer: **16779146.6**

(22) Anmeldetag: **12.10.2016**

(51) Int Cl.:
**H02M 3/158** (2006.01)

(86) Internationale Anmeldenummer:
**PCT/EP2016/074494**

(87) Internationale Veröffentlichungsnummer:
**WO 2017/064132 (20.04.2017 Gazette 2017/16)**

(54) **VORRICHTUNG ZUM STEUERN EINES SCHALTENDEN GLEICHSPANNUNGSWANDLERS, SCHALTENDER GLEICHSPANNUNGSWANDLER UND VERFAHREN ZUM STEUERN EINES GESCHALTETEN GLEICHSPANNUNGSWANDLERS**

DEVICE FOR CONTROLLING A SWITCHING DC-DC CONVERTER, SWITCHING DC-DC CONVERTER, AND METHOD FOR CONTROLLING A SWITCHING DC-DC CONVERTER

DISPOSITIF DE COMMANDE D'UN CONVERTISSEUR DE TENSION CONTINUE À DÉCOUPAGE, CONVERTISSEUR DE TENSION CONTINUE À DÉCOUPAGE ET PROCÉDÉ DE COMMANDE D'UN CONVERTISSEUR DE TENSION CONTINUE À DÉCOUPAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.10.2015 DE 102015219850**

(43) Veröffentlichungstag der Anmeldung:
**18.07.2018 Patentblatt 2018/29**

(73) Patentinhaber: **Fraunhofer-Gesellschaft zur Förderung der angewandten Forschung e.V.
80686 München (DE)**

(72) Erfinder:
• **YU, Zhe**
  **24558 Henstedt-Ulzburg (DE)**
• **KAPELS, Holger**
  **23843 Bad Oldesloe (DE)**
• **HOFFMANN, Klaus F.**
  **22523 Hamburg (DE)**

(74) Vertreter: **König, Andreas Rudolf et al
Schoppe, Zimmermann, Stöckeler
Zinkler, Schenk & Partner mbB
Patentanwälte
Radlkoferstraße 2
81373 München (DE)**

(56) Entgegenhaltungen:
**CH-B1- 699 920     DE-A1-102013 218 228**

• **Zhe Yu ET AL: "High Efficiency Bidirectional DC-DC Converter with Wide Input and Output Voltage Ranges for Battery Systems", , 21. Mai 2015 (2015-05-21), XP055335994, Gefunden im Internet:
URL:http://ieeexplore.ieee.org/ielx7/71488 16/7148817/07149059.pdf?tp=&arnumber=71490 59&isnumber=7148817 [gefunden am 2017-01-17]**
• **JONES DAVID C ET AL: "Buck-Boost Converter Efficiency Maximization via a Nonlinear Digital Control Mapping for Adaptive Effective Switching Frequency", IEEE JOURNAL OF EMERGING AND SELECTED TOPICS IN POWER ELECTRONICS, IEEE, PISCATAWAY, NJ, USA, Bd. 1, Nr. 3, 1. September 2013 (2013-09-01), Seiten 153-165, XP011527616, ISSN: 2168-6777, DOI: 10.1109/JESTPE.2013.2277852 [gefunden am 2013-09-20]**
• **STEFAN WAFFLER ET AL: "A Novel Low-Loss Modulation Strategy for High-Power Bidirectional Buck Boost Converters", IEEE TRANSACTIONS ON POWER ELECTRONICS, INSTITUTE OF ELECTRICAL AND ELECTRONICS ENGINEERS, USA, Bd. 24, Nr. 6, 1. Juni 2009 (2009-06-01), Seiten 1589-1599, XP011262259, ISSN: 0885-8993**

EP 3 347 978 B1

**Beschreibung**

Die vorliegende Erfindung bezieht sich auf eine Vorrichtung zum Steuern eines schaltenden Gleichspannungswandlers, insbesondere zum Steuern eines Tief-Hochsetzstellers, auf einen schaltenden Gleichspannungswandler und auf ein Verfahren zum Steuern eines geschalteten Gleichspannungswandlers. Die vorliegende Erfindung bezieht sich ferner auf einen bidirektionalen kaskadierten Tief-Hochsetzsteller und Konzepte zur Auslegung und zum Steuern der Tief-Hochsetzsteller.

Zum Erzielen einer stabilen und hocheffizienten Energieversorgung werden heutzutage viele regenerative Energiesysteme durch einen bidirektionalen Gleichspannungswandler mit Zwischenenergiespeicherelementen ausgelegt. Aufgrund der Rückspeisefähigkeit nimmt der Anteil der bidirektionalen Brückenschaltungen stetig zu. Diese haben die Funktion, unterschiedliche Spannungsebenen anzupassen. Dementsprechend kommt es bei vielen Anwendungen vor, dass sich die Bereiche der Eingangs- und Ausgangsspannung des Wandlers bei einem aufladenden und entladenden Energiespeicher überlappen. Folglich wird hierfür eine spezielle Art von Gleichspannungswandlern, die sowohl im Tiefsetzmodus, d. h. reduzieren einer Eingangsspannung, als auch im Hochsetzmodus, d. h., Erhöhen einer Eingangsspannung, betrieben werden kann, benötigt.

Es existieren kaskadierte Tief-Hochsetzsteller mit vier Schaltern, die aufgrund einer einfachen Topologie und einer hohen Lastfähigkeit häufig für solche Anwendungen eingesetzt werden. Als Schnittstelle, insbesondere zwischen regenerativen Energiesystemen und Energiespeichern, hat die Effizienz des Wandlers einen signifikanten Einfluss auf den Wirkungsgrad des gesamten Systems.

In US 6,166,527 wird ein Steuerungskonzept für einen Tief-Hochsetzsteller zur Reduzierung der Leistungsverluste vorgestellt. Je nach Verhältnis von Eingangs- und Ausgangsspannung wird der Wandler in drei unterschiedlichen Modi betrieben, und zwar im Tiefsetzmodus, Hochsetzmodus oder im Tief-Hochsetzmodus. Dadurch werden die Leistungsverluste des Gleichspannungswandlers bei Tiefsetz- und Hochsetzmodi zwar verringert, aufgrund des simultanen Betriebs der vier Schalter bleiben die Verluste beim Tiefsetz-Hochsetzmodus aber immer noch groß.

In US 2012/0146594 A1 wird ein Steuerungskonzept vorgestellt, bei dem der Tief-Hochsetzsteller in fünf unterschiedlichen Modi betrieben wird. Dazu gehören der Tiefsetzmodus, ein Tiefsetzmodus mit halbierter Schaltfrequenz, der Tief-Hochsetzmodus mit halbierter Schaltfrequenz, der Hochsetzmodus mit halbierter Schaltfrequenz und der Hochsetzmodus. Bei einer Annäherung von Eingangs- und Ausgangsspannung wird die Schaltfrequenz der PWM-Signale (PWM = Pulsweitenmodulation) halbiert. Dadurch kann der Bereich der Tief- und Hochsetzmodi erweitert werden und der Bereich der verlustreichen Tief-Hochsetzmodi entsprechend verkürzt werden. Dies ermöglicht zwar eine Erhöhung des Wirkungsgrads des Wandlers in der Übergangsphase zwischen dem Tiefsetzmodus und dem Hochsetzmodus, weist jedoch in dem Tief-Hochsetzmodus eine geringe Energieeffizienz auf.

Folglich besteht ein Bedarf an Konzepten zum Reduzieren oder Minimieren der Leistungsverluste in kaskadierten Tief-Hochsetzstellern.

Eine Aufgabe der vorliegenden Erfindung besteht deshalb darin, eine Vorrichtung zum Steuern eines schaltenden Gleichspannungswandlers, einen schaltenden Gleichspannungswandler und ein Verfahren zum Steuern eines geschalteten Gleichspannungswandlers zu schaffen, das eine hohe Effizienz des Betriebs des Gleichspannungswandlers ermöglicht.

Diese Aufgabe wird durch den Gegenstand der unabhängigen Patentansprüche gelöst.

Ein Kerngedanke der vorliegenden Erfindung besteht darin, erkannt zu haben, dass Schaltverluste in kaskadierten Tief-Hochsetzstellern dadurch reduziert oder minimiert werden können, dass Schalter der Gleichspannungswandler spannungsfrei geschaltet werden, etwa gemäß einem ZVS-Konzept (ZVS = Zero Voltage Switching, spannungsfreies Schalten). Dies ermöglicht, hart schaltende Vorgänge, d. h., Schaltvorgänge bei denen Spannungen an den Leistungsanschlüssen der Schalter anliegen, mit Hilfe von weich schaltenden Schaltvorgängen, d h., zumindest näherungsweise spannungsfreie oder stromfreie Schaltvorgänge, zu ersetzen. Dies wird erreicht durch Steuerungskonzepte für schaltende Gleichspannungswandler gemäß Ausführungsbeispielen.

Ein Gleichspannungswandler weist beispielsweise eine erste Halbbrückenschaltung umfassend einen ersten Schalter und einen zweiten Schalter und eine zweite Halbbrückenschaltung umfassend einen dritten Schalter und einen vierten Schalter auf. Der schaltende Gleichspannungswandler umfasst eine Induktivität, die zwischen die Mittenabgriffe der ersten und der zweiten Halbbrückenschaltung geschaltet ist. Gemäß einem Ausführungsbeispiel umfasst eine Vorrichtung zum Steuern eines schaltenden Gleichspannungswandlers eine Steuereinheit, die ausgebildet ist, um abhängig von einer Eingangsspannung und einer Ausgangsspannung an dem schaltenden Gleichspannungswandler eine Schaltfrequenz der Schalter des Gleichspannungswandlers, die Tastverhältnisse des ersten und vierten Schalters und die Zeitverzögerung zwischen dem Einschalten des ersten Schalters und dem Einschalten des vierten Schalters anzupassen. Die Steuereinheit ist ausgebildet, um die Schaltfrequenz, das erste Tastverhältnis, das zweite Tastverhältnis und die Zeitverzögerung basierend auf einem Ausgangsstrom des schaltenden Gleichspannungswandlers zu bestimmen. Durch die Anpassung der Schaltfrequenz, der Tastverhältnisse und der Zeitverzögerung wird ein hocheffizienter Betrieb des Tief-Hochsetzstellers über einen großen Bereich von Arbeitspunkten bzw. bei allen erlaubten Leistungspunkten bzw. Arbeitspunkten ermöglicht.

Gemäß einem weiteren Ausführungsbeispiel umfasst ein schaltender Gleichspannungswandler eine erste Halbbrückenschaltung umfassend einen ersten Schalter und einen zweiten Schalter und eine zweite Halbbrückenschaltung umfassend einen dritten Schalter und einen vierten Schalter. Der schaltende Gleichspannungswandler umfasst eine Induktivität, die zwischen die Mittenabgriffe der ersten und der zweiten Halbbrückenschaltung geschaltet ist. Der schaltende Gleichspannungswandler umfasst ferner eine Ansteuereinheit, die ausgebildet ist, um abhängig von einer Eingangsspannung und einer Ausgangsspannung an dem schaltenden Gleichspannungswandler eine Schaltfrequenz der Schalter des Gleichspannungswandlers, die Tastverhältnisse des ersten und vierten Schalters und die Zeitverzögerung zwischen dem Einschalten des ersten Schalters und des vierten Schalters anzupassen. Die Ansteuereinheit ist ausgebildet, um die Schaltfrequenz, das erste Tastverhältnis, das zweite Tastverhältnis und die Zeitverzögerung basierend auf einem Ausgangsstrom des schaltenden Gleichspannungswandlers zu bestimmen.

Gemäß einem weiteren Ausführungsbeispiel umfasst ein Verfahren zum Steuern eines geschalteten Gleichspannungswandlers ein Verbinden einer Steuereinheit mit einem schaltenden Gleichspannungswandler. Der schaltende Gleichspannungswandler weist eine erste Halbbrückenschaltung umfassend einen ersten Schalter und einen zweiten Schalter und eine zweite Halbbrückenschaltung umfassend einen dritten Schalter und einen vierten Schalter auf. Der schaltende Gleichspannungswandler umfasst eine Induktivität, die zwischen die Mittenabgriffe der ersten und der zweiten Halbbrückenschaltung geschaltet ist. Das Verfahren umfasst ein Anpassen einer Schaltfrequenz der Schalter des Gleichspannungswandlers, der Tastverhältnisse des ersten und des vierten Schalters und der Zeitverzögerung zwischen dem Einschalten des ersten und des vierten Schalters abhängig von einer Eingangsspannung und einer Ausgangsspannung an dem schaltenden Gleichspannungswandler. Das Anpassen der Schaltfrequenz, des ersten Tastverhältnisses, des zweiten Tastverhältnisses und der Zeitverzögerung wird basierend auf einem Ausgangsstrom des schaltenden Gleichspannungswandlers ausgeführt.

Weitere vorteilhafte Ausführungsformen sind der Gegenstand der abhängigen Patentansprüche.

Bevorzugte Ausführungsbeispiele der vorliegenden Erfindung werden nachfolgend Bezug nehmend auf die beiliegenden Zeichnungen erläutert. Es zeigen:

Fig. 1 ein schematisches Blockschaltbild einer Vorrichtung zum Steuern eines schaltenden Gleichspannungswandlers gemäß einem Ausführungsbeispiel;

Fig. 2 ein schematisches Blockschaltbild eines schaltenden Gleichspannungswandlers, wie er durch die Ansteuereinheit gemäß Fig. 1 ansteuerbar ist;

Fig. 3a bis 3f schematisch einen zeitlichen Verlauf einer Ansteuerung der Schalter gemäß einem ersten Konzept hierin beschriebener Ausführungsbeispiele;

Fig. 4a bis 4l schematisch Zustände des Stromflusses durch den schaltenden Gleichspannungswandler basierend auf dem ersten Konzept;

Fig. 5a bis 5d einen zeitlichen Verlauf der Ansteuerung der Schalter gemäß dem ersten Konzept, bei dem Totzeiten der Schalter vernachlässigt sind;

Fig. 6a bis 6c schematische Darstellungen von Kurven der von der Steuereinheit eingestellten Schaltfrequenz über eine variierende Ausgangsfrequenz des schaltenden Gleichspannungswandlers gemäß dem ersten Konzept;

Fig. 7a bis 7c zu den Fig. 6a bis 6c vergleichbare Verläufe der Schaltfrequenz für negative Ausgangsströme gemäß einem Ausführungsbeispiel;

Fig. 8a bis 8c schematische Verläufe eines von der Steuereinheit gemäß dem ersten Konzept hierin beschriebener Ausführungsbeispiele eingestellten ersten Tastverhältnisses;

Fig. 9a bis 9c schematische Verläufe eines von der Steuereinheit gemäß dem ersten Konzept hierin beschriebener Ausführungsbeispiele eingestellten zweiten Tastverhältnisses;

Fig. 10 schematisch einen Verlauf einer von der Steuereinheit gemäß dem ersten Konzept hierin beschriebener Ausführungsbeispiele eingestellten Zeitverzögerung zwischen Schaltvorgängen;

Fig. 11 Spannungsverläufe eines Kommutierungsvorgangs während einer Totzeit zwischen dem Ausschalten eines Schalters und dem Einschalten eines anderen Schalters des geschalteten Gleichspannungswandlers gemäß dem ersten Konzept hierin beschriebener Ausführungsbeispiele;

Fig. 12a bis 12c      schematische Verläufe von Wirkungsgraden des ersten Konzepts hierin beschriebener Ausführungsbeispiele bei positiven ausgangsströmen;

Fig. 13a bis 13c      schematische Verläufe von Wirkungsgraden des ersten Konzepts hierin beschriebener Ausführungsbeispiele bei negativen ausgangsströmen;

Fig. 14      einen Vergleich von Wirkungsgraden zwischen dem ersten Konzept hierin beschriebener Ausführungsbeispiele zum Schalten eines schaltenden Gleichspannungswandlers und einem Konzept gemäß dem Stand der Technik;

Fig. 15a bis 15b      eine schematische Ansicht einer Variation der Zeitverzögerung gemäß einem zweiten Konzept hierin beschriebener Ausführungsbeispiele zur Ansteuerung eines schaltenden Gleichspannungswandlers;

Fig. 16a bis 16c      Verläufe von Schaltfrequenzen, mit der die Schalter des schaltenden Gleichspannungswandlers von der Steuereinheit gemäß dem zweiten Konzept hierin beschriebener Ausführungsbeispiele steuerbar sind;

Fig. 17a bis 17c      schematische Verläufe eines Zeitverzögerungsfaktors bei verschiedenen Verhältnissen zwischen einer Ausgangsspannung und einer Eingangsspannung bei positiven Ausgangsströmen gemäß dem zweiten Konzept hierin beschriebener Ausführungsbeispiele;

Fig. 18a bis 18c      zu den Fig. 17a bis 17c verbgleichbare Verläufe des Zeitverzögerungsfaktors für negative Werte des Ausgangsstroms gemäß dem zweiten Konzept hierin beschriebener Ausführungsbeispiele;

Fig. 19a bis 19c      schematisch einen erzielbaren Wirkungsgrad, für das zweite Konzept hierin beschriebener Ausführungsbeispiele für einen positiven Ausgangsstrom; und

Fig. 20a bis 20c      eine zu den Fig. 19a bis 19c vergleichbare Darstellung von Wirkungsgraden gemäß dem zweiten Konzept hierin beschriebener Ausführungsbeispiele für negative Ausgangsströme.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

Nachfolgende Ausführungsbeispiele verwenden Indizes zur Unterscheidung gleicher oder gleichartiger Elemente in den Figuren, etwa Schalter oder Kapazitäten. Die Beschreibung referenziert diese Indizes individuell oder durch Verwendung des allgemeingültigen Index i. Eine Verwendung des Index i soll so verstanden werden, dass er damit alle oder jedes einzelne der jeweiligen Elemente bezeichnet.

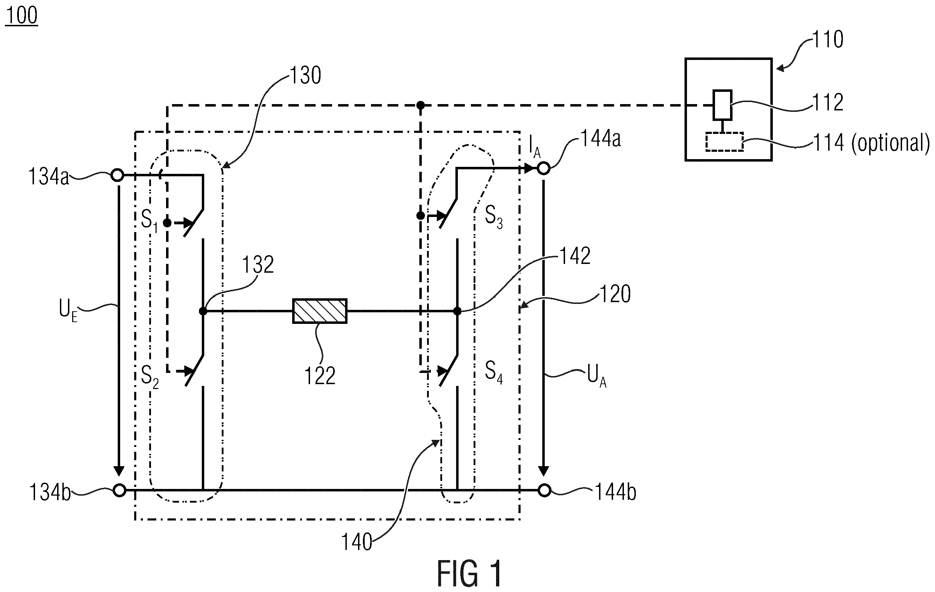

Fig. 1 zeigt ein schematisches Blockschaltbild einer Vorrichtung 110 zum Steuern eines schaltenden Gleichspannungswandlers 120. Der schaltende Gleichspannungswandler 120 umfasst eine erste Halbbrückenschaltung 130 und eine zweite Halbbrückenschaltung 140. Die erste Halbbrückenschaltung 130 umfasst einen ersten Schalter $S_1$ und einen zweiten Schalter $S_2$, die beispielsweise zu einer Serienschaltung verschaltet sind. Die erste Halbbrückenschaltung 130 umfasst einen Mittenabgriff 132, der zwischen den Schaltern $S_1$ und $S_2$ angeordnet ist. Die zweite Halbbrückenschaltung 140 umfasst zwei Schalter $S_3$ und $S_4$, die ebenfalls seriell miteinander verschaltet sind. Ein Mittenabgriff 142 der zweiten Halbbrückenschaltung 140 ist zwischen den Schaltern $S_3$ und $S_4$ angeordnet. Zwischen die Mittenabgriffe 132 und 142 ist eine Induktivität 122 geschaltet, so dass die Halbbrückenschaltungen 130 und 140 über die Induktivität 122 verbunden sind. Tore der Halbbrückenschaltungen 130 bzw. 140 können Anschlüsse 134a, 134b bzw. 144a und 144b umfassen. Jeweils ein Anschluss 134b und 144b können ebenfalls miteinander verbunden sein, so dass ein gemeinsames Referenzpotential der Halbbrückenschaltungen 130 und 140 erhalten wird. Das Blockschaltbild des schaltenden Gleichspannungswandlers kann als vereinfachtes Blockschaltbild eines kaskadierten Tief-Hochsetzstellers verstanden werden.

Die Vorrichtung 110 umfasst eine Steuereinheit 112, die ausgebildet ist, um abhängig von einer Eingangsspannung $U_E$ zwischen den Anschlüsse 134a und 134b und abhängig von einer Ausgangsspannung $U_A$ zwischen den Anschlüssen 144a und 144b eine Schaltfrequenz der Schalter $S_1$ bis $S_4$, Tastverhältnisse zumindest des ersten Schalters $S_1$ und des vierten Schalters $S_4$ und eine Zeitverzögerung zwischen Einschaltvorgängen der Schalter $S_1$ und $S_4$ anzupassen, was nachfolgend detailliert erläutert wird. Durch diese Anpassungen können Schaltverluste gering sein, so dass eine hohe Effizienz des Betriebs des schaltenden Gleichspannungswandlers 120 erhalten wird.

Gemäß einem weiteren Ausführungsbeispiel umfasst ein schaltender Gleichspannungswandler 100 den schaltenden Gleichspannungswandler 120, d. h., die erste Halbbrückenschaltung 130, die zweite Halbbrückenschaltung 140 und die Induktivität 122. Der schaltende Gleichspannungswandler 100 umfasst dabei die Steuereinheit 112 als Ansteuereinheit. Das bedeutet, der schaltende Gleichspannungswandler 100 kann den Tief-Hochsetzsteller sowie eine Ansteuereinheit zur Anpassung der Schaltfrequenz der Schalter, der Tastverhältnisse sowie zur Anpassung der Zeitverzögerung umfassen.

Die Steuereinheit kann bspw. als Prozessor, Mikrocontroller, programmierbarer Logikbaustein (beispielsweise ein feldprogrammierbares Gatterarray, ein FPGA) oder dergleichen ausgeführt sein. Die Vorrichtung 110 kann beispielsweise einen Speicher 114 aufweisen, in dem Werte für die Schaltfrequenz, die Tastverhältnisse und/oder die Zeitverzögerung hinterlegt sind. Die hinterlegten Werte können einen Bezug zur Eingangsspannung $U_E$, zur Ausgangsspannung $U_A$ und/oder einen Bezug zu einem Ausgangsstrom $I_A$ aufweisen, so dass die hinterlegten Werte basierend auf den Bezugsgrößen ermittelbar sind. So kann die Ansteuereinheit durch Sensorwerte und/oder durch empfangene Signale Informationen bzgl. der Eingangsspannung, der Ausgangsspannung und ggf. des Ausgangsstroms aufweisen und basierend darauf einzustellende Parameter in dem Speicher auslesen. Alternativ kann die Vorrichtung 110 ausgebildet sein, um die jeweiligen Werte zu ermitteln, beispielsweise basierend auf einer von der Vorrichtung 110 implementierten oder in dem Speicher 114 gespeicherten Berechnungsvorschrift. Nachfolgende Ausführungsbeispiele sind so beschrieben, dass die Steuereinheit ausgebildet ist, um die Schaltfrequenz, die Tastverhältnisse und die Zeitverzögerung basierend auf der Eingangsspannung, der Ausgangsspannung und basierend auf dem Ausgangsstrom des schaltenden Gleichspannungswandlers zu bestimmen. Gemäß weiteren Ausführungsbeispielen ist der Gleichspannungswandler ausgebildet, um die Schaltfrequenz, die Tastverhältnisse und die Zeitverzögerung basierend auf der Eingangsspannung und der Ausgangsspannung des schaltenden Gleichspannungswandlers zu bestimmen. Der schaltende Gleichspannungswandler kann einen im Wesentlichen konstanten Ausgangsstrom aufweisen, so dass auf eine Berücksichtigung des Ausgangsstroms verzichtet werden kann. So kann bspw. eine Stromdrossel verwendet werden, um einen konstanten Stromfluss zu erhalten.

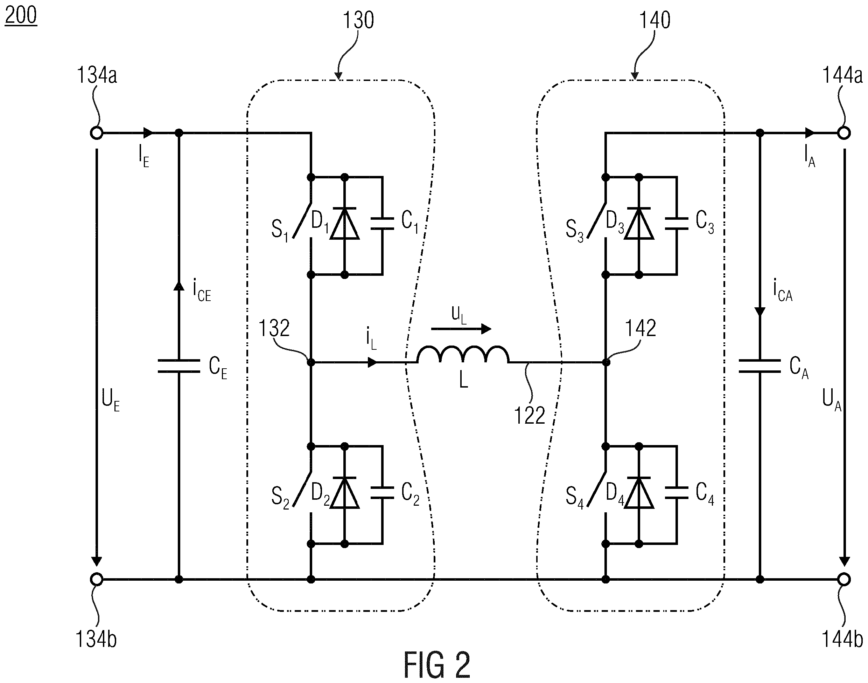

Fig. 2 zeigt ein schematisches Blockschaltbild eines schaltenden Gleichspannungswandlers 200, wie er durch die Ansteuereinheit 112 ansteuerbar ist. Parallel zu den Schaltern $S_1$ bis $S_4$ ist jeweils eine Diode $D_1$, $D_2$, $D_3$ bzw. $D_4$ und eine Kapazität $C_1$, $C_2$, $C_3$ bzw. $C_4$ geschaltet. Kapazitäten $C_E$ bzw. $C_A$ können zwischen die Anschlüsse 134a und 134b bzw. 144a und 144b geschaltet sein. Die Schalter $S_1$ bis $S_4$ können als halbleiterbasierte Schalter und insbesondere als sogenannte "Leistungshalbleiter" ausgeführt sein, etwa in Form von MOSFETs (MOSFET = Metal Oxide Semiconductor Field Effect Transistor; MetallOxid-Halbleiter-Feldeffekttransistor) oder IGBTs (IGBT = Insulated Gate Bipolar Transistor; Bipolartransistoren mit isolierter Gate-Elektrode).

Die Dioden $D_1$ bis $D_4$ können beispielsweise als parasitäre Dioden der Schalter $S_1$ bis $S_4$ realisiert sein. Alternativ oder zusätzlich kann es sich um in den Schaltern $S_1$ bis $S_4$ integrierte Dioden handeln. Alternativ oder zusätzlich hierzu können die Dioden $D_1$ bis $D_4$ zusätzlich zu den Schaltern $S_1$ bis $S_4$ parallel geschaltet diskrete Dioden sein. Die Kapazitäten $C_1$ bis $C_4$ können als parasitäre Kapazitäten der Schalter $S_1$ bis $S_4$ realisiert sein. Alternativ oder zusätzlich können die Kapazitäten $C_1$ bis $C_4$ als diskrete Kapazitäten parallel zu den Schaltern $S_1$ bis $S_4$ geschaltet sein.

Die mit L bezeichnete Induktivität 122 ist als Speicherdrossel, d.h. als leistungselektronische Induktivität, einsetzbar. Ein Strom $i_L$ durch die Induktivität 122 ist so eingezeichnet, dass er von der ersten Halbbrückenschaltung 130 zu der zweiten Halbbrückenschaltung 140 fließt. Dabei kann der Strom $i_L$ sowohl positive als auch negative Werte annehmen, d.h. ein effektiver Stromfluss ist in beide Richtungen möglich. Über die Induktivität 122 fällt während eines Betriebs eine Spannung $u_L$ ab. Ein Eingangsstrom $I_E$ ist so eingezeichnet, dass eine Stromrichtung eines positiven Stroms $I_E$ durch die Pfeilrichtung gekennzeichnet ist, d.h. ausgehend von dem Anschluss 134a hin zu dem Schalter $S_1$. Vereinfacht, wenn $I_E$ positiv ist, fließt $I_E$ von links nach rechts, Wobei dies wechselseitig vertauschbar ist, wenn der Strom $I_E$ negativ ist. $U_A$ bezeichnet die Ausgangsspannung, während $I_A$ den Ausgangsstrom bezeichnet. Eine Stromrichtung eines positiven Stroms $I_A$ wird durch die Pfeilrichtung gekennzeichnet, d.h., wenn der Strom $I_A$ positiv ist, fließt der Strom $I_A$ hin zu dem Anschluss 144a, d.h. von links nach rechts, wobei dies wechselseitig vertauschbar ist, wenn der Strom $I_A$ negativ ist. Die Pfeilrichtungen von Strömen $i_{CE}$ durch den Eingangskondensator $C_E$ bzw. $i_{CA}$ durch den Ausgangskondensator $C_A$ bezeichnet ebenfalls die jeweils positive Stromrichtung.

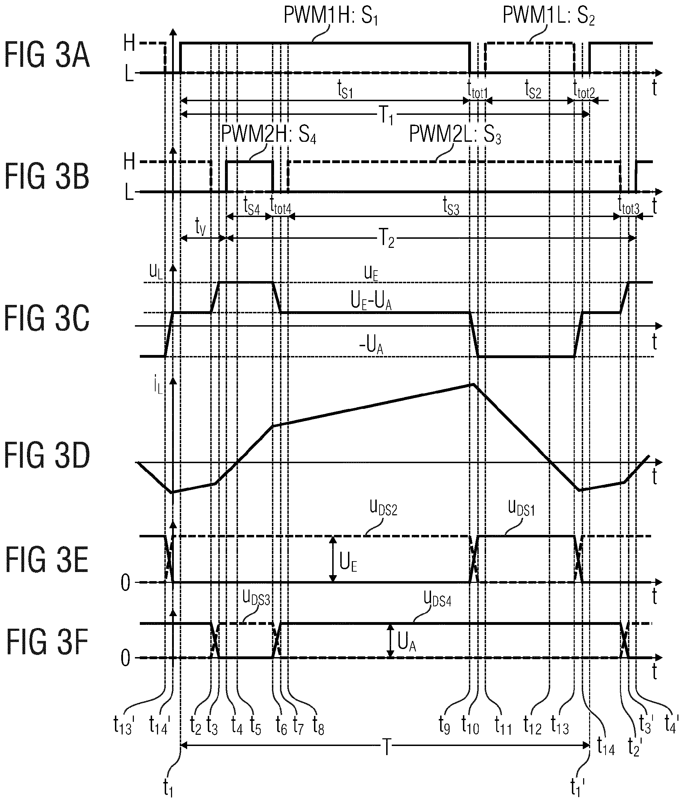

Die Figuren 3a bis 3f zeigen schematisch einen zeitlichen Verlauf einer Ansteuerung der Schalter $S_1$ bis $S_4$ gemäß einem ersten Konzept hierin beschriebener Ausführungsbeispiele. Die Fig. 3a bis 3f weisen eine gemeinsame Zeitachse t auf. Die in Fig. 3f bezeichneten Zeitpunkte $t_1$ bis $t_{14}$ sowie $t_1'$ bis $t_{14}'$ beziehen sich auf ein Ansteuerintervall $T_1$ der ersten Halbbrückenschaltung 130 und bezeichnen ebenfalls Zeitpunkte in den anderen Figuren 3a bis 3e. Die Zeitpunkte $t_1'$ bis $t_{t4}'$ bezeichnen zu den Zeitpunkten $t_1$ bis $t_{14}$ vergleichbare Zeitpunkte in vorangehenden oder nachfolgenden Ansteuerintervallen.

Fig. 3a zeigt einen schematischen Verlauf einer Ansteuerung der Schalter $S_1$, der mit einem Signal PWM1H ansteuerbar ist, und des Schalters $S_2$, der mit einem Signal PWM1L ansteuerbar ist. Die Fig. 3b zeigt einen schematischen Verlauf einer Ansteuerung des Schalters $S_3$, der mit einem Signal PWM2L ansteuerbar ist, und des Schalters $S_4$, der mit einem Signal PWM2H ansteuerbar ist. Bei den Signalen zur Ansteuerung der Schalter $S_1$ bis $S_4$ handelt es sich beispielsweise um pulsweitenmodulierte Signale (PWM-Signale). Die Schalter $S_1$ und $S_2$ bzw. $S_3$ und $S_4$ können paarweise so angesteuert werden, dass sie jeweils im Wesentlichen komplementär zueinander angesteuert werden. Beispielsweise ist höchstens einer der Schalter $S_1$ oder $S_2$ bzw. $S_3$ oder $S_4$ eingeschaltet. Die Fig. 3a und 3b sind vereinfacht so dargestellt, dass sie einen niedrigen Pegel L (Low) und einen hohen Pegel H (High) aufweisen. Ein niedriger Pegel deutet einen ausgeschalteten Zustand des jeweiligen Schalters an. Jeder der Schalter $S_1$ bis $S_4$ kann gemäß einer normal leitenden oder einer normal sperrenden Konfiguration implementiert sein, vereinfacht als Schließer oder als Öffner. Der hohe Pegel H deutet einen eingeschalteten, d. h., leitenden, Zustand eines als Schließer ausgeführten Schalters an. Der ausgeschaltete Zustand bezieht sich dabei auf einen nicht leitenden Zustand. Bei einer Implementierung eines Schalters $S_1$ bis $S_4$ als Öffner kann ein gleiches Verhalten durch Invertierung des jeweiligen Signals erhalten werden.

Die Schalter $S_1$ und $S_2$ werden innerhalb der Schaltperiode $T_1$ angesteuert. Die Schalter $S_3$ und $S_4$ werden innerhalb der Schaltperiode $T_2$ angesteuert. Die Schaltperiode $T_2$ ist gegenüber der Schaltperiode $T_1$ um die Zeitverzögerung $t_v$ verschoben und weist eine im Wesentlichen gleiche Periodendauer T auf. Die Schaltfrequenz f, mit der die Schalter $S_1$ bis $S_4$ geschaltet werden, ist beispielsweise 1/T. Die Steuereinheit 112 ist ausgebildet, um die Zeitdauer T und mithin die Frequenz f = 1/T zu verändern. Die Steuereinheit ist ferner ausgebildet, um Zeitdauern $t_{S1}$ bis $t_{S4}$ zu verändern, die eine jeweilige Zeitdauer oder Zeitintervall beschreiben, innerhalb der der jeweilige Schalter $S_1$ bis $S_4$ eingeschaltet ist. Die Zeitdauern $t_{S1}$ bis $t_{S4}$ werden auch als Einschaltzeiten bezeichnet. Zwischen den eingeschalteten Zuständen zweier Schalter $S_1$ und $S_2$ bzw. $S_3$ und $S_4$ einer Halbbrückenschaltung kann eine Totzeit $t_{tot1}$ bis $t_{tot4}$ angeordnet sein, in welcher jeweils beide Schalter der Halbbrückenschaltung ausgeschaltet sind. Ein Verändern der Einschaltzeiten $t_{S1}$ bis $t_{S4}$ kann als Veränderung eines Tastverhältnisses des jeweiligen Schalters, d.h. als Anteil innerhalb der Periodendauer T, in welcher der jeweilige Schalter eingeschaltet ist, verstanden werden.

Der Schalter $S_4$ wird verglichen mit dem Schalter $S_1$ nach der Zeitverzögerung $t_v$ eingeschaltet. Die Zeitverzögerung $t_v$ kann als Anteil der Periodendauer T verstanden werden und ist ebenfalls durch die Steuereinheit 112 veränderlich einstellbar.

Die hierin vorgestellten Ansteuerkonzepte weisen die gemeinsame Idee auf, die Schaltfrequenz 1/T, die Tastverhältnisse $t_{Si}/T$ der Ansteuersignale und die Zeitverzögerung $t_v$ zwischen den Ansteuersignalen für die erste Halbbrückenschaltung (linke Seite des Tief-Hochsetzstellers mit den Schaltern $S_1$ und $S_2$) und den Ansteuersignalen für die zweite Halbbrückenschaltung (rechte Seite des Tief-Hochsetzstellers mit den Schaltern $S_3$ und $S_4$) in Abhängigkeit von Arbeitspunkten des geschalteten Gleichspannungswandlers zu modulieren. Ein Arbeitspunkt bezeichnet dabei eine anliegende Eingangsspannung und eine anliegende Ausgangsspannung. Der Arbeitspunkt kann von dem Ausgangsstrom $I_A$ abhängig oder beeinflusst sein. Durch die Modulationen kann einerseits der ZVSentlastete Betrieb der Leistungshalbleiter (Schalter) gewährleistet werden. Andererseits können die weiteren Verluste, inklusive der Durchlassverluste in den Schaltern, der Verluste in der Speicherdrossel sowie der Verluste in den Ein- und Ausgangskondensatoren minimiert werden.

Wie es in Fig. 3a dargestellt ist, beträgt die Zeitdauer des High-Pegel-Zustands H des Signals PWM1H innerhalb einer Periode T den Wert $t_{S1}$. Das bedeutet, die Zeitdauer des Einschaltzustands des Schalters $S_1$ innerhalb einer Periode ist $t_{S1}$. Die Zeitdauer des High-Pegel-Zustands des Signals PWM1L innerhalb einer Periode ist $t_{S2}$. Das bedeutet, die Zeitdauer des Einschaltzustands von $S_2$ innerhalb einer Periode ist $t_{S2}$. Die Totzeit zwischen dem Ausschalten des Schalters $S_1$ und dem Einschalten des Schalters $S_2$ ist mit $t_{tot1}$ bezeichnet.

Wie es in Fig. 3b dargestellt ist, weisen die Signale PWM2H und PWM2L die Periode $T_2$ auf, die die gleiche Periodendauer T aufweist, wie die Periodendauer $T_1$ der Signale PWM1H und PWM1L. Die Zeitdauer des High-Pegel-Zustands H des Signals PWM2H innerhalb einer Periode ist mit $t_{S4}$ bezeichnet. Das heißt, die Zeitdauer des Einschaltzustands des Schalters $S_4$ innerhalb der Periode T ist $t_{S4}$. Die Zeitdauer des High-Pegel-Zustands des Signals PWM2L innerhalb der Periode T ist mit $t_{S3}$ bezeichnet. Das heißt, die Zeitdauer des Einschaltzustands des Schalters $S_3$ innerhalb der Periode T ist $t_{S3}$. Die Totzeit zwischen dem Ausschalten des Schalters $S_4$ und dem Einschalten des Schalters $S_3$ ist mit $t_{tot4}$ bezeichnet.

Gemäß einem Ausführungsbeispiel ist die Zeitdauer $t_{S1}$ stets länger als die Zeitdauer $t_{S4}$, so dass gilt, dass $t_{S1} > t_{S4}$. Die Zeitverzögerung $t_v$ zwischen dem Einschalten des Schalters $S_1$ und des Schalters $S_4$ weist eine Zeitdauer von $\geq 0$ auf und ist gleichzeitig kleiner oder gleich als die Differenz der Zeitdauern $t_{S1}$ und $t_{S4}$, so dass gilt, dass $0 \leq t_v \leq t_{S1}-t_{S4}$. Gemäß diesem Ausführungsbeispiel ist die Steuereinheit ausgebildet, um die Schalter des schaltenden Gleichspannungswandlers so anzusteuern, dass der zweite Schalter $S_2$ stets ausgeschaltet ist, wenn der vierte Schalter $S_4$ eingeschaltet ist. Das bedeutet, dass ein Schalterzustand des Schalters $S_3$ und ein Schalterzustand des vierten Schalters $S_4$ in jedem Betriebspunkt des geschalteten Spannungswandlers im Wesentlichen komplementär zueinander sind, wenn etwa die Totzeiten vernachlässigt werden. In anderen Worten sind die Schalter $S_3$ und $S_4$ gemäß diesem Ausführungs-

beispiel nie gleichzeitig an. Alternativ oder zusätzlich kann die Steuereinheit ausgebildet sein, um den vierten Schalter nur in Zeitintervallen anzuschalten, in denen der erste Schalter $S_1$ eingeschaltet ist. Dies kann für eine Steuerung einer Kommutierung von Strömen in dem schaltenden Gleichspannungswandler genutzt werden, um die lastfreien ZVS-Zustände der Schalter auch bei veränderlichen Arbeitspunkten zu erhalten. Gemäß einem Ausführungsbeispiel ist die Steuereinheit ausgebildet, um Schaltvorgänge des Schalters $S_4$ nur zu Zeitpunkten anzusteuern, wenn der Schalter $S_1$ den eingeschalteten Zustand aufweist.

Wie es in den Fig. 3a und 3b angedeutet ist, können die Zeitdauern $t_{S1}$ bis $t_{S4}$ voneinander verschiedene Zeitdauern aufweisen. Gemäß anderen Ausführungsbeispielen, wie sie nachfolgend erläutert werden, können die Zeitdauern auch gleich oder paarweise gleich sein.

Eine Reihenfolge der Schaltvorgänge der Schalter gemäß den Fig. 3a bis 3f kann auch so beschrieben werden, dass ausgehend von einer Situation nach dem Zeitpunkt $t_1$, in welcher der Schalter $S_1$ eingeschaltet ist, der Schalter $S_3$ zum Zeitpunkt $t_2$ ausgeschaltet wird. In einem darauffolgenden Zeitpunkt $t_4$ wird der Schalter $S_4$ eingeschaltet. In einem darauffolgenden Zeitpunkt $t_6$ wird der Schalter $S_4$ ausgeschaltet. In einem darauffolgenden Zeitpunkt $t_8$ wird der Schalter $S_3$ eingeschaltet. In einem darauffolgenden Zeitpunkt $t_9$ wird der Schalter $S_1$ ausgeschaltet. Darauffolgend wird zu einem Zeitpunkt $t_{11}$ der Schalter $S_2$ eingeschaltet, um in einem darauffolgenden Zeitpunkt $t_{12}$ ausgeschaltet zu werden. Zu einem darauffolgenden Zeitpunkt $t_1'$, der beispielsweise einen Beginn einer neuen Periode T der ersten Halbbrückenschaltung bezeichnet, wird der Schalter $S_1$ wieder eingeschaltet.

Die obige Ungleichung bezüglich der Zeitverzögerung $t_v$ weist zwei Grenzfälle auf. Ein erster Grenzfall ist für $t_v = 0$ gegeben. In diesem Fall kann eine Reihenfolge der Schaltvorgänge der Schalter so beschrieben werden, dass die Schalter $S_1$ und $S_4$ gleichzeitig eingeschaltet werden, der Schalter $S_4$ ausgeschaltet wird und danach der Schalter $S_3$ eingeschaltet wird. Anschließend wird der Schalter $S_1$ ausgeschaltet. Nachfolgend wird der Schalter $S_2$ eingeschaltet, woraufhin die Schalter $S_2$ und $S_3$ gleichzeitig ausgeschaltet werden. Zu einem folgenden Zeitpunkt werden die Schalter $S_1$ und $S_4$ wieder gleichzeitig, d. h., in mit geringer oder keiner Verzögerung, eingeschaltet. Für den zweiten Grenzfall, wenn $t_v = t_{S1} - t_{S4}$ ist, kann die Reihenfolge der Schalter so zusammengefasst werden, dass zuerst der Schalter $S_1$ eingeschaltet und zu einem nachfolgenden Zeitpunkt der Schalter $S_3$ ausgeschaltet wird. Zu einem folgenden Zeitpunkt wird der Schalter $S_4$ eingeschaltet. Zu einem darauffolgenden Zeitpunkt werden die Schalter $S_1$ und $S_4$ gleichzeitig ausgeschaltet. Zu einem späteren Zeitpunkt werden die Schalter $S_2$ und $S_3$ gleichzeitig eingeschaltet. Zu einem nachfolgenden Zeitpunkt wird der Schalter $S_2$ ausgeschaltet. Zu einem späteren Zeitpunkt wird der Schalter $S_1$ eingeschaltet.

Die Fig. 3c und 3d zeigen die Verläufe der Spannung $u_L$ und des Stroms $i_L$ der Speicherdrossel L, vgl. Fig. 2, innerhalb einer Periode. Während dem Einschalten der Schalter $S_1$ und $S_3$ ist die Spannung $u_L$ gleich der Differenz zwischen der Eingangsspannung $U_E$ und der Ausgangsspannung $U_A$, d.h. $u_L = U_E - U_A$. Der Strom $i_L$ ist negativ und ändert sich mit der Steigung $(U_E - U_A)/L$. Während dem Einschalten der Schalter $S_1$ und $S_4$ ist die Spannung $u_L$ gleich der Eingangsspannung $U_E$. Der Strom $i_L$ steigt mit der Steigung $U_E/L$ und dreht seine Richtung von negativ zu positiv um. Während dem Einschalten der Schalter $S_2$ und $S_3$ liegt die negative Spannung $-U_A$ an der Speicherdrossel an. Der Strom $i_L$ bzw. dessen Stromstärke sinkt und dreht sich von positiv zu negativ. Der Strom $i_L$ der Speicherdrossel dreht seine Richtung zweimal innerhalb einer Periode um, d.h. er weist zweimal je Periode einen Vorzeichenwechsel auf. Bei einem Ausschalten der Schalter $S_1$ und $S_4$ ist der Speicherdrosselstrom $i_L$ beispielsweise positiv. Beim Ausschalten der Schalter $S_2$ und $S_3$ ist der Strom $i_L$ negativ.

In Fig. 3e werden die Spannungen $u_{DS1}$ und $u_{DS2}$ jeweils auf den Schaltern $S_1$ und $S_2$ dargestellt. Die Schalter $S_1$ und $S_2$ können so angesteuert werden, dass sie stets spannungslos umgeschaltet werden, das bedeutet, es kann ZVS-entlastet geschaltet werden (ZVS = Zero Voltage Switching). So ist beispielsweise die Spannung $u_{DS2}$ zum Zeitpunkt $t_{11}$, zu dem der Schalter $S_2$ eingeschaltet wird, beispielsweise 0. Zum Zeitpunkt $t_1$, zu dem der Schalter $S_1$ eingeschaltet wird, ist die Spannung $u_{DS1}$ gleich 0 oder näherungsweise 0. Zum Zeitpunkt $t_8$, zu dem der Schalter $S_3$ eingeschaltet wird, ist die Spannung $u_{DS3}$ gleich 0 oder näherungsweise 0. Zum Zeitpunkt $t_4$, zu dem der Schalter $S_4$ eingeschaltet wird, ist die Spannung $u_{DS4}$ beispielsweise gleich 0 oder näherungsweise 0.

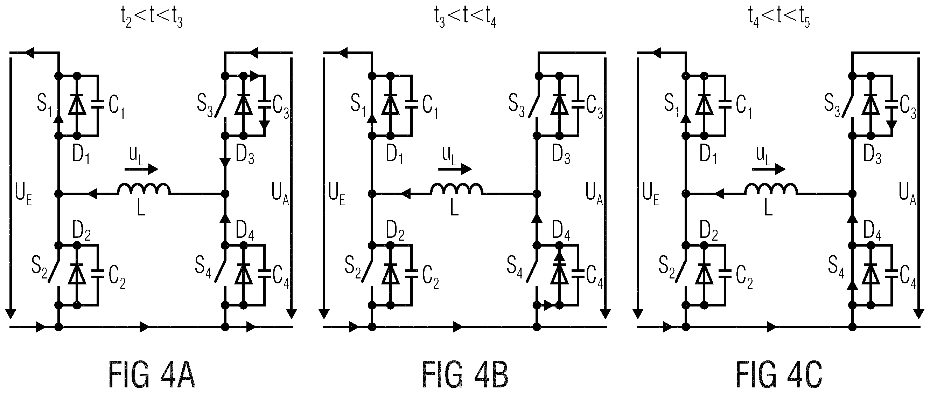

Figuren 4a bis 4l zeigen schematisch Zustände des Stromflusses während der in den Fig. 3a bis 3f beschriebenen Schaltperioden.

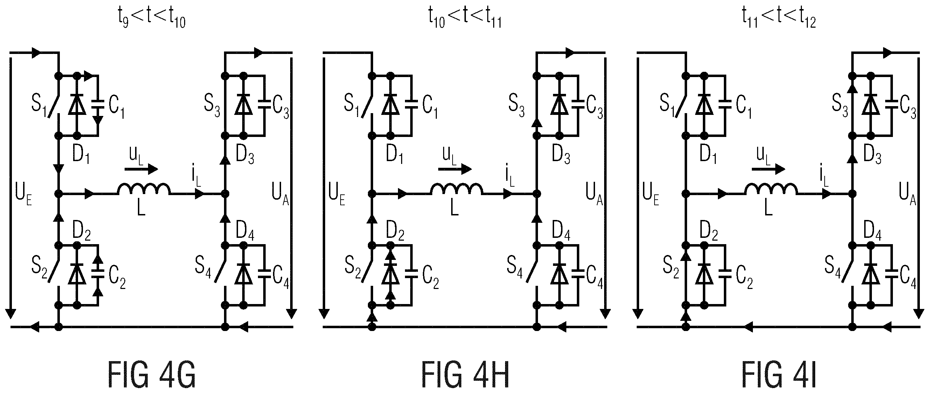

Zum Zeitpunkt $t_9$ wird der Schalter $S_1$ spannungslos ausgeschaltet. Aufgrund der nicht abgebauten Spannung $u_{DS2}$ ist die Diode $D_2$ zum Zeitpunkt $t_9$ immer noch gesperrt. Folglich kann der positive Strom $i_L$ gegebenenfalls ausschließlich auf die Kapazitäten $C_1$ und $C_2$ kommutieren. Dadurch wird die Kapazität $C_1$ aufgeladen und die Kapazität $C_2$ wird entladen. Zum Zeitpunkt $t_{10}$ ist die Spannung $u_{DS2}$ des Schalters $S_2$ auf 0 abgebaut. Der Strom $i_L$ fließt durch die Diode $D_2$. Zum Zeitpunkt $t_{11}$ wird der Schalter $S_2$ spannungslos eingeschaltet. Der Strom $i_L$ kommutiert von der Diode auf den Kanal des Schalters $S_2$, wie es beispielsweise in den Fig. 4g, 4h und 4i dargestellt ist. Diese Kommutierung kann mit einem geringen Maß an Verlusten bzw. näherungsweise ohne Verluste erfolgen.

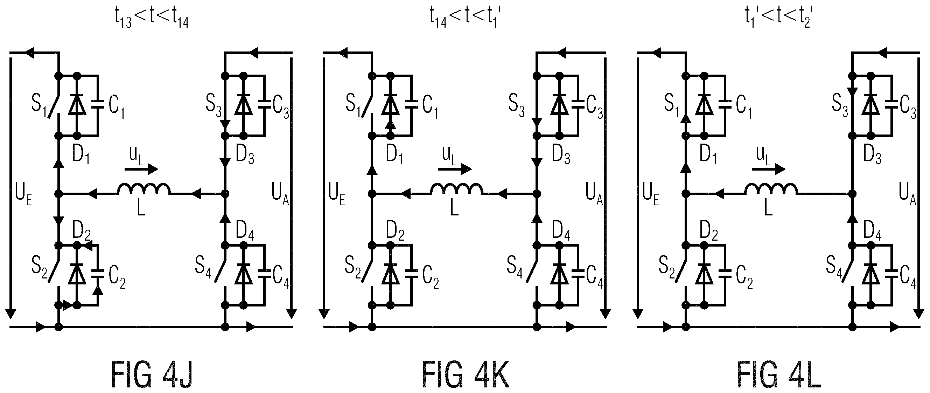

Zum Zeitpunkt $t_{13}$ wird der Schalter $S_2$ spannungslos ausgeschaltet. Aufgrund der nicht abgebauten Spannung $u_{DS1}$ ist die Diode $D_1$ zum Zeitpunkt $t_{13}$ immer noch gesperrt. Folglich kann der negative Strom $i_L$ gegebenenfalls ausschließlich auf die Kondensatoren $C_1$ und $C_2$ kommutieren. Dadurch wird die Kapazität $C_1$ entladen und die Kapazität $C_2$ wird aufgeladen. Zum Zeitpunkt $t_{14}$ ist die Spannung $u_{DS1}$ des Schalters $S_1$ abgebaut und weist beispielsweise einen Wert von 0 oder näherungsweise 0 auf. Der Strom $i_L$ fließt durch die Diode $D_1$. Zum Zeitpunkt $t_1'$ des nachfolgenden Schaltintervalls wird der Schalter $S_1$ spannungslos eingeschaltet. Der Strom $i_L$ kommutiert von der Diode auf den Kanal des Schalters $S_1$, wie es beispielsweise in den Fig. 4j, 4k und 4l dargestellt ist. Diese Kommutierung kann mit einem geringen Maß an Verlusten und gegebenenfalls näherungsweise ohne Verluste erfolgen, In der Fig. 3f sind die Spannungen $u_{DS3}$ und $u_{DS4}$ jeweils für die Schalter $S_3$ und $S_4$ dargestellt. Die Schalter $S_3$ und $S_4$ werden ebenfalls ZVS-entlastet und mithin verlustlos oder verlustarm umgeschaltet, wie es vorangehend für die Schalter $S_1$ und $S_2$ beschrieben ist.

Zum Zeitpunkt $t_2$ wird der Schalter $S_3$ spannungslos ausgeschaltet. Wegen der nicht abgebauten Spannung $u_{DS4}$ ist die Diode $D_4$ zum Zeitpunkt $t_2$ gesperrt. Folglich kann der negative Strom $i_L$ nur auf die Kondensatoren $C_3$ und $C_4$ kommutieren. Dadurch wird die Kapazität $C_3$ aufgeladen und die Kapazität $C_4$ wird entladen. Zum Zeitpunkt $t_3$ ist die Spannung $u_{DS4}$ des Schalters $S_4$ auf 0 reduziert. Der Strom $i_L$ fließt durch die Diode $D_4$. Zum Zeitpunkt $t_4$ wird der Schalter $S_4$ spannungslos eingeschaltet. Der Strom kommutiert nachfolgend ohne Verluste oder verlustarm von der Diode auf den Kanal des Schalters $S_4$, wie es in den Fig. 4a, 4b und 4c dargestellt ist.

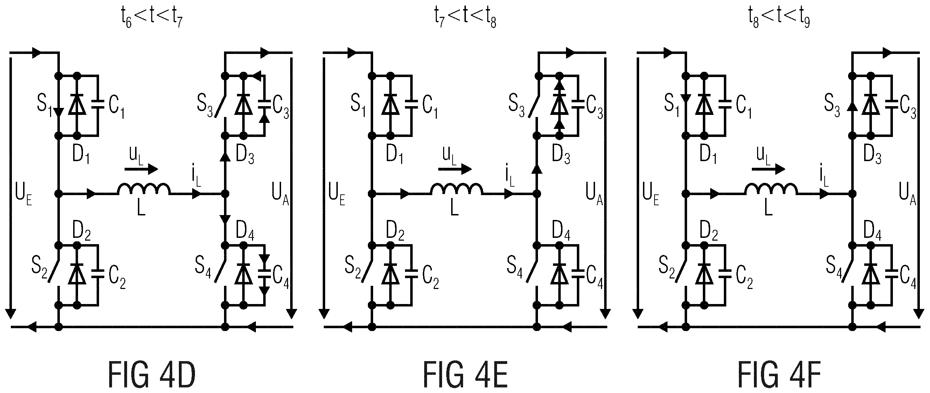

Zum Zeitpunkt $t_6$ wird der Schalter $S_4$ spannungslos ausgeschaltet. Wegen der nicht abgebauten Spannung $u_{DS3}$ ist die Diode $D_3$ zum Zeitpunkt $t_6$ gesperrt. Folglich kann der positive Strom $i_L$ nur auf die Kondensatoren $C_3$ und $C_4$ kommutieren. Dadurch wird die Kapazität $C_3$ entladen und die Kapazität $C_4$ wird aufgeladen. Zum Zeitpunkt $t_7$ ist die Spannung $u_{DS3}$ des Schalters $S_3$ auf null reduziert. Der Strom $i_L$ fließt durch die Diode $D_3$. Zum Zeitpunkt $t_8$ wird der Schalter $S_3$ spannungslos eingeschaltet. Der Strom kommutiert verlustarm oder ohne Verluste von der Diode auf den Kanal des Schalters $S_3$, wie es in den Fig. 4d, 4e und 4f dargestellt ist.

Aus den Fig. 3a bis 3f wird deutlich, dass eine Veränderung der Eingangsspannung und/oder der Ausgangsspannung eine Veränderung der Zeitpunkte bewirken kann, zu denen die entsprechenden Schalter spannungsfrei eingeschaltet oder ausgeschaltet werden können. Die Steuereinheit 112 ist ausgebildet, um abhängig von der Eingangsspannung und der Ausgangsspannung an dem schaltenden Gleichspannungswandler die Schaltfrequenz der Schalter, die Tastverhältnisse von Schaltern und die Zeitverzögerung zwischen dem Einschalten des Schalters $S_1$ und des Schalters $S_4$ anzupassen.

Bevor nachfolgend Bezug genommen wird auf eine Anpassung der Schaltfrequenz, der Tastverhältnisse und der Zeitverzögerung werden kurz einige Hintergründe erläutert. Wie vorangehend ausgeführt, können die Totzeiten $t_{tot1}$, $t_{tot2}$, $t_{tot3}$ und $t_{tot4}$ sehr kurz und im Vergleich zu den Einschaltzeiten, d.h. den Zeiten, in denen die jeweiligen Schalter leitend sind, $t_{S1}$, $t_{S2}$, $t_{S3}$ und $t_{S4}$ vernachlässigbar sein. Dies gilt bspw. bei niedrigen Frequenzen, etwa bis zu Frequenzen von 150 kHz. Bei hohen Frequenzen, etwa oberhalb von 1 GHz können die Totzeiten $t_{tot1}$, $t_{tot2}$, $t_{tot3}$ und $t_{tot4}$ einen relevanten Zeitanteil umfassen. Bei einer Vernachlässigung der Totzeiten $t_{tot1}$, $t_{tot2}$, $t_{tot3}$ und $t_{tot4}$ ergibt sich näherungsweise:

$$T = t_{S1} + t_{S2} = t_{S3} + t_{S4}$$

$$(1)$$

Die Tastverhältnisse $D_1$ des ersten Schalters $S_1$ und $D_2$ des Schalters $S_4$ (Engl.: Duty Ratio bzw. Duty Cycle) können definiert werden zu:

$$D_1 = \frac{t_{S1}}{T}, D_2 = \frac{t_{S4}}{T}$$

$$(2)$$

Daraus kann hergeleitet werden, dass:

$$\frac{U_A}{U_E} = \frac{D_1}{1 - D_2}$$

$$(3)$$

Das bedeutet, dass das Spannungsübersetzungsverhältnis von Eingangsspannung zur Ausgangsspannung $U_A$ von den Tastverhältnissen $D_1$ und $D_2$ abhängig sein kann, insbesondere von den Einschaltzeiten $t_{S1}$ und $t_{S2}$ sowie der Periode T. Das Spannungsübersetzungsverhältnis kann unabhängig von der Zeitverzögerung $t_v$ zwischen dem Einschalten der Schalter $S_1$ und $S_4$ sein. Durch Variation der Tastverhältnisse $D_1$ und $D_2$ kann die Ausgangsspannung $U_A$ gesteuert und/oder geregelt werden. Das Übersetzungsverhältnis kann wie folgt hergeleitet werden:
Allgemein kann für eine Speicherdrossel L gelten, dass:

$$u_L = L \cdot \frac{di_L}{dt} \Rightarrow i_L(t) = i_L(t_1) + \frac{1}{L} \cdot \int_{t_I}^{t} u_L \, dt$$

$$(4)$$

Da sich der Stromverlauf des Speicherdrosselstroms $i_L$ in stationären Zuständen des geschalteten Gleichspannungswandlers wiederholen kann, ergibt sich beispielsweise, dass:

$$i_L(T + t_1) = i_L(t_1)$$

$$(5)$$

Durch Einsetzen der Gleichung 4 in Gleichung 5 ergibt sich, dass

$$\int_{t_I}^{t_1 + T} u_L \, dt = 0$$

$$(6)$$

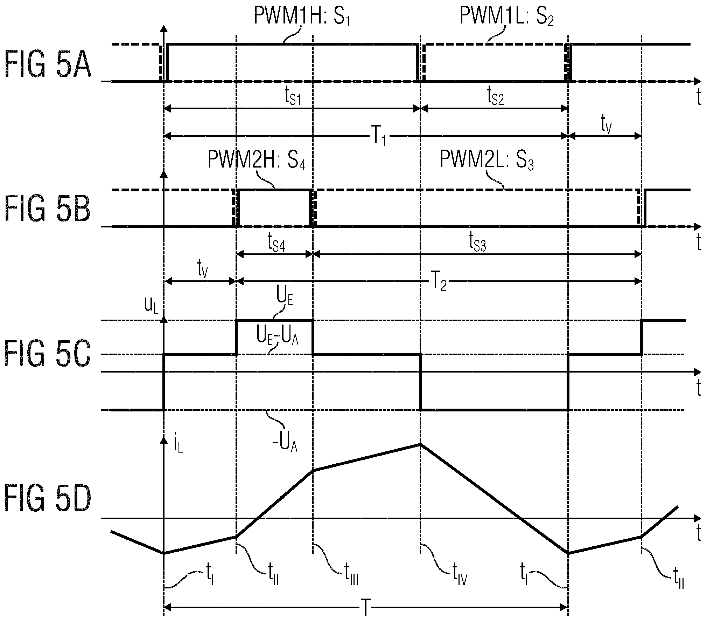

Die Fig. 5a bis 5d entsprechen im Wesentlichen den Fig. 3a bis 3d, wobei die Totzeiten vernachlässigt sind. Der Fig. 5c sind die Spannungsniveaus der Spannung $u_L$ an der Speicherdrossel in den einzelnen Zeitpunkten $t_I$ bis $t_{IV}$ zu entnehmen. Dabei gilt:

$$t_I \rightarrow t_{II}: u_L = U_E - U_A$$
$$t_{II} \rightarrow t_{III}: u_L = U_E$$
$$t_{III} \rightarrow t_{IV}: u_L = U_E - U_A$$
$$t_{IV} \rightarrow t_I: u_L = -U_A$$

$$(7)$$

Durch Einsetzen der Gleichung 7 in Gleichung 6 ergibt sich, dass:

9

$$\int_{t_{\mathrm{I}}}^{t_{\mathrm{I}}+T} u_L \, dt = \int_{t_{\mathrm{I}}}^{t_{\mathrm{II}}} u_L dt + \int_{t_{\mathrm{II}}}^{t_{\mathrm{III}}} u_L dt + \int_{t_{\mathrm{III}}}^{t_{\mathrm{IV}}} u_L dt + \int_{t_{\mathrm{IV}}}^{t_{\mathrm{I}}} u_L dt = 0$$

$$\Downarrow$$

$$(U_E - U_A) \cdot t_V + U_E \cdot t_{S4} + (U_E - U_A) \cdot (t_{S1} - t_V - t_{S4}) + (-U_A) \cdot (T - t_{S1}) = 0$$

$$\Downarrow$$

$$\frac{U_A}{U_E} = \frac{t_{S1}}{T - t_{S4}} = \frac{D_1}{1 - D_2}$$

$$(8)$$

Der Speicherdrosselstrom $i_L$ ist beim Ausschalten der Schalter $S_2$ bis $S_3$ negativ, vgl. beispielsweise Fig. 3d zu den Zeitpunkten $t_{13}$ und $t_2$ oder Fig. 5d zum Zeitpunkt $t_I$. Allein durch einen negativen Strom $i_L$ ist nicht garantiert, dass die Schalter $S_2$ und $S_3$ ZVS-entlastet und mithin verlustlos geschaltet werden. Zusätzlich kann beispielsweise eine Anforderung darin bestehen, dass der Betrag des Stroms $i_L$ größer als ein Referenzwert $I_0$ ist, damit die zu den Schaltern parallel geschalteten Kondensatoren $C_2$ bzw. $C_3$ innerhalb der Totzeiten vollständig umgeladen werden können. Der Referenzwert $I_0$ des Stroms wird später genauer beschrieben.

Ähnlich kann dies für den Strom $i_L$ für die Schalter $S_1$ und $S_4$ gelten. Zu den Zeitpunkten $t_9$ und $t_6$ ist der Strom beispielsweise positiv. Auch hier kann eine Anforderung darin bestehen, dass der Betrag des Stroms $i_L$ größer als der Wert $I_0$ ist, damit die zu den Schaltern geschalteten Kondensatoren $C_1$ bzw. $C_4$ innerhalb der Totzeiten vollständig umgeleitet werden kann. Ist dies erfüllt, können die Schalter $S_1$ und $S_4$ verlustlos umgeschaltet werden. Mathematisch können die Bedingungen für verlustlose Umschaltung der Schalter wie folgt dargestellt werden:

$$\text{Bedingung 1: } max(i_L(t_2), i_L(t_{13})) \leq -I_0$$

$$\text{Bedingung 2: } min(i_L(t_6), i_L(t_9)) \geq I_0 \qquad (9)$$

Die Steuereinheit 112 kann ausgebildet sein, um diese Bedingungen durch Variation der Schaltfrequenzen, der Tastverhältnisse und der Zeitverzögerung zu erfüllen. Die Werte des Stroms $i_L$ zu den Zeitpunkten $t_2$, $t_6$, $t_9$ und $t_{13}$ sind beispielsweise von Arbeitspunkten, der Schaltfrequenz f = 1/T bzw. der Schaltperiode T und der Zeitverzögerung $t_V$ abhängig. Ein Arbeitspunkt bezieht sich dabei auf die Parameter Eingangsspannung $U_E$, die Ausgangsspannung $U_A$ und den Ausgangsstrom $I_A$. Wenn sich die Arbeitspunkte ändern, etwa wenn die Ausgangsspannung $U_A$ sinkt, der Laststrom $I_A$ steigt oder die Versorgungsspannung $U_E$ schwankt, und eine Anpassung der Schaltfrequenz f und/oder der Zeitverzögerung $t_V$ nicht erfolgt, verändern sich die Werte des Stroms $i_L$ beim Ausschalten der Schalter zu den Zeitpunkten $t_2$, $t_6$, $t_9$ und $t_{13}$. Dies kann dazu führen, dass die oben genannten Bedingungen der Gleichung 9 verletzt werden. Eine Anpassung der Schaltfrequenz f, der Zeitverzögerung $t_V$ in Abhängigkeit der Arbeitspunkte ermöglicht eine Vermeidung der Verletzung der Bedingungen.

Wie oben ausgeführt, ist das Spannungsübersetzungsverhältnis von den Tastverhältnissen $D_1$ und $D_2$ beeinflusst. Für ein Spannungsübersetzungsverhältnis $U_A / U_E$ können jeweils mehrere Kombinationen von $D_1$ und $D_2$ existieren. Beispielsweise kann sich für ein Spannungsübersetzungsverhältnis $U_A/U_E$ = 2 die Kombination $D_1$ = 0,7 und $D_2$ = 0,65 oder $D_1$ = 0,8 und $D_2$ = 0,6 oder $D_1$ = 0,9 und $D_2$ = 0,55 anbieten. Das erste Tastverhältnis und das zweite Tastverhältnis kann basierend auf dem Spannungsübersetzungsverhältnis bestimmt werden. Bei einer Hochsetzung der Eingangsspannung ($U_A > U_E$) und/oder einer Tiefsetzung ($U_A < U_E$) kann das erste Tastverhältnis stets größer oder gleich sein als das zweite Tastverhältnis.

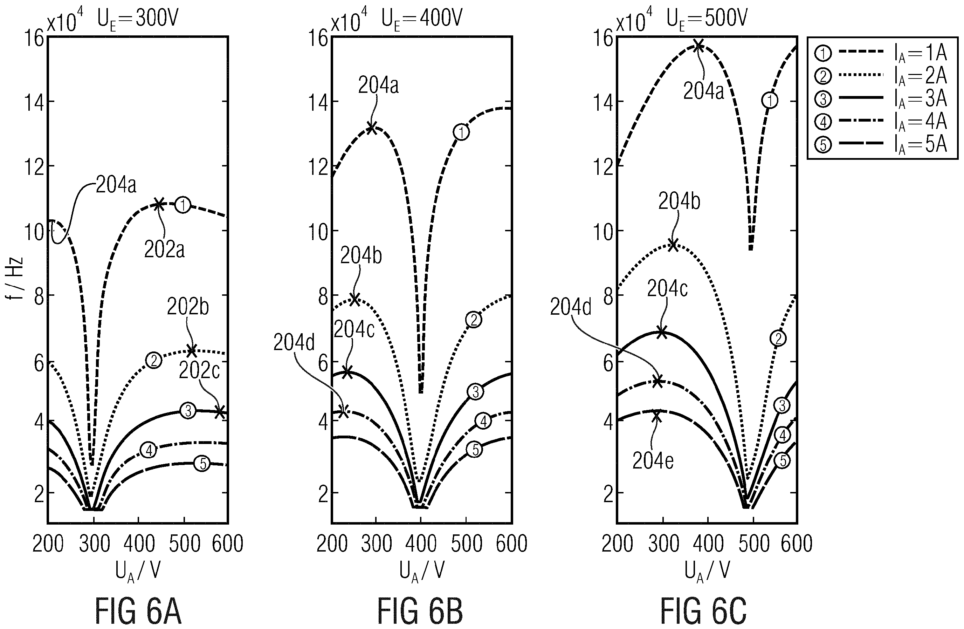

Nachfolgend wird Bezug genommen auf die Anpassung der Schaltfrequenz. Die Fig. 6a bis 6c zeigen schematische Verläufe der von der Steuereinheit eingestellten Schaltfrequenz f über eine variierende Ausgangsfrequenz $U_A$. Fig. 6a zeigt diesen Verlauf für die Eingangsspannung $U_E$ = 300V, Fig. 6b für die Eingangsspannung $U_E$ = 400V und Fig. 6 für die Eingangsspannung $U_E$ = 500V. Jede der Fig. 6a bis 6c zeigt fünf Kurven, die mit 1 bis 5 bezeichnet sind und mit aufsteigender Nummernfolge eine aufsteigende Stromstärke von 1A, 2A, 3A, 4A bzw. 5A aufweisen. Die Steuereinheit ist ausgebildet, um ausgehend von einer Situation, in der die Ausgangsspannung $U_A$ der Eingangsspannung $U_E$ entspricht, d.h. ausgehend von einem Wert der Ausgangsspannung $U_A$ von 300V (Fig. 6a), 400V (Fig. 6b) bzw. 500V (Fig. 6c). bei einer sinkenden oder steigenden Ausgangsspannung die Schaltfrequenz zunächst zu erhöhen. Anders ausgedrückt kann die Steuereinheit ausgebildet sein, um bei einer Gleichheit der Spannungen $U_A$ und $U_E$ eine zumindest lokal minimale Die Steuereinheit ist ausgebildet, um die Schaltfrequenz solange zu erhöhen, minimale Schaltfrequenz einzustellen. Die Steuereinheit ist ausgebildet, um bis die Ausgangsspannung $U_A$ einen Referenzwert 202a-c oder 204a-e erreicht hat. Die Referenzwerte 202i bezeichnen dabei einen Referenzwert bei einer Erhöhung der Ausgangsspannung. Die Referenzwerte 204i bezeichnen einen entsprechenden Referenzwert bei einer Verringerung der Ausgangsspannung $U_A$. Wenn die Ausgangsspannung den Referenzwert überschritten hat, das bedeutet, wenn die Ausgangsspannung $U_A$ größer ist als die Referenzwerte 202i bzw. kleiner ist als die Referenzwerte 204i, ist die Steuereinheit ausgebildet, um die Schaltfrequenz zu reduzieren. Beispielsweise kann die Steuereinheit ausgebildet sein, um die Ausgangsspannung $U_A$, die Eingangsspannung $U_E$ und/oder den Strom $I_A$ zu erfassen und um basierend darauf eine einzustellende Schaltfrequenz zu bestimmen.

Wie es in den Fig. 6a bis 6c dargestellt ist, ist die Steuereinheit bspw. ausgebildet, um mit zunehmender positiver Stromstärke die Schaltfrequenz zu reduzieren. Mit zunehmender Eingangsspannung $U_E$ wird die Schaltfrequenz f erhöht. Das bedeutet, dass die Steuereinheit ausgebildet ist, um die Schaltfrequenz abhängig von der Eingangsspannung $U_E$ zu bestimmen. Die dargestellten Verläufe der einzustellenden Schaltfrequenz sind qualitativ zwischen den verschiedenen Stromstärken gleich oder vergleichbar. Eine hohe Effizienz kann auch ohne Berücksichtigung des Stroms erhalten werden. Eine zusätzliche Berücksichtigung des Stroms kann davon ausgehend eine weitere Verbesserung ermöglichen.

Die Steuereinheit ist ferner ausgebildet, um eine Reduzierungsgeschwindigkeit, mit der die Schaltfrequenz bei zunehmender Stromstärke erhöht wird, mit einer Erhöhung des Betrags des Ausgangsstroms $I_A$ zu reduzieren. Beispielsweise kann die Reduzierungsgeschwindigkeit linear, einer Wurzelfunktion folgend oder quadratisch mit zunehmendem Strombetragswert absinken. Die Steuereinrichtung kann ausgebildet sein, um mit einer Steigerung der Eingangsspannung $U_E$ die Schaltfrequenz zu erhöhen. Die Schaltfrequenz f kann durch die Steuereinheit 112 oder durch äußere Einflüsse begrenzt werden. beispielsweise kann eine maximale Schaltfrequenz von der Schaltgeschwindigkeit der angeordneten Leistungshalbleiter $S_1$ bis $S_4$ beeinflusst oder abhängig sein. Eine minimale Schaltfrequenz f kann ausgelegt sein, um Spannungsrippel der Ausgangsspannung $U_A$ zu reduzieren und/oder um ein Volumen der Schaltung zu begrenzen.

In anderen Worten kann die Steuereinheit ausgebildet sein, um mit einer Vergrößerung der Differenz zwischen der Eingangsspannung $U_E$ und der Ausgangsspannung $U_A$ die Schaltfrequenz zuerst, d.h. bis zum Erreichen eines Referenzwerts 202i oder 204i, schnell zu erhöhen und dann wieder zu reduzieren. Die Steuereinheit kann ausgebildet sein, um mit einer Erhöhung des Betrags des Ausgangsstroms $I_A$ die Schaltfrequenz zu reduzieren.

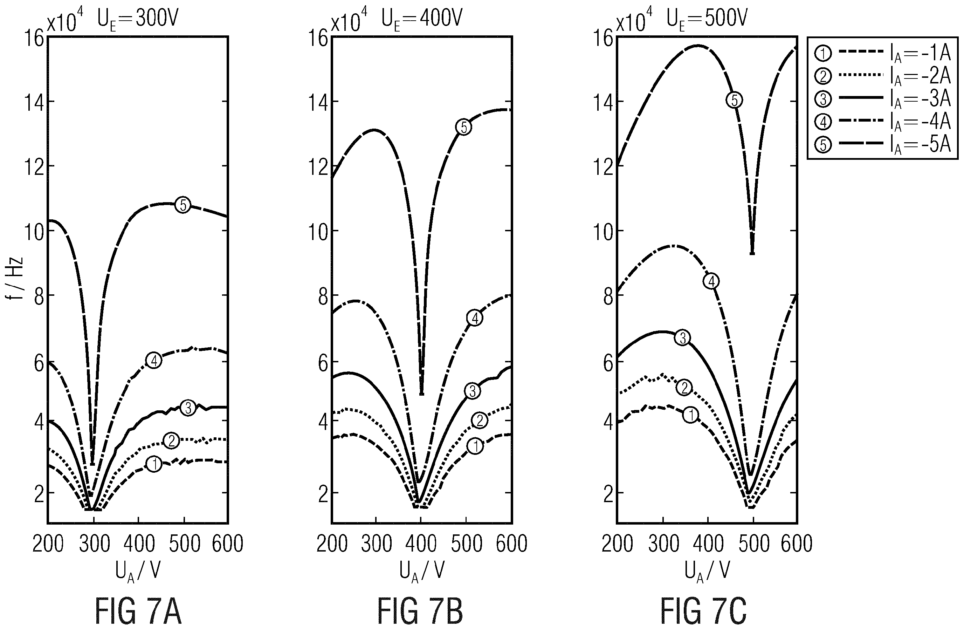

Die Fig. 7a bis 7c zeigen zu den Fig. 6a bis 6c vergleichbare Verläufe der Schaltfrequenz f. Die Kombinationen aus Ausgangsspannung $U_A$ und Eingangsspannung $U_E$ entsprechen der jeweiligen Fig. 6a, 6b bzw. 6c. Die Kurven 1 bis 5 zeigen in aufsteigender Reihenfolge einen aufsteigenden Stromwert -5A, -4A, 3A, -2A bis -1A. Wird der Betragswert der jeweiligen Stromstärke herangezogen, so wird deutlich, dass die Steuereinheit ausgebildet ist, um die Schaltfrequenz bei einer Erhöhung des Betrags des Stromwerts $I_A$, zu reduzieren.

Wie es in den Fig. 6a bis 6c dargestellt ist, ist die Steuereinheit ausgebildet, um mit einer Vergrößerung der Spannungsdifferenz zwischen der Eingangsspannung $U_E$ und der Ausgangsspannung $U_A$ zunächst steil zu erhöhen und dann wieder relativ langsam zu reduzieren. Das bedeutet, dass ausgehend von den Referenzpunkten 202i bzw. 204i ein Betrag eines Gradienten in Richtung der Situation, dass die Eingangsspannung $U_E$ der Ausgangsspannung $U_A$ entspricht, größer ist als ein Betrag eines Gradienten in eine Richtung weg von dieser Situation. Die Steuereinheit ist ferner konfiguriert, um die Schaltfrequenz f bei einer Erhöhung des Ausgangsstroms oder eines Betrags hiervon zu erhöhen. Die Steuereinheit ist darüber hinaus konfiguriert, um die Schaltfrequenz mit einer Erhöhung der Eingangsspannung $U_E$ zu erhöhen. In den Fig. 6a bis 6c ist für die Fälle $U_E$ = 300V, $I_A$ = 5A und $U_E$ = 400V und $I_A$ = 5A ersichtlich, dass die Steuereinheit konfiguriert ist, um die Schaltfrequenz in der Nähe der Arbeitspunkte, wo die Ausgangsspannung $U_A$ gleich der Eingangsspannung $U_E$ ist, zu begrenzen. Vorliegend wird die minimale Schaltfrequenz beispielsweise au 15 kHz begrenzt.

Die von der Steuereinheit ausgeführte Variation der Schaltfrequenz f gemäß den Fig. 7a bis 7c entspricht im Wesentlichen den Verläufen bei einem positiven Ausgangsstrom gemäß den Fig. 6a bis 6c. Mit der Erhöhung des Betrags des Ausgangsstroms $I_A$ kann die Steuereinheit konfiguriert sein, um die Schaltfrequenz f zu reduzieren. Die Reduzierungsgeschwindigkeit kann sich mit der Erhöhung des Betrags des Ausgangsstroms $I_A$ verlangsamen.

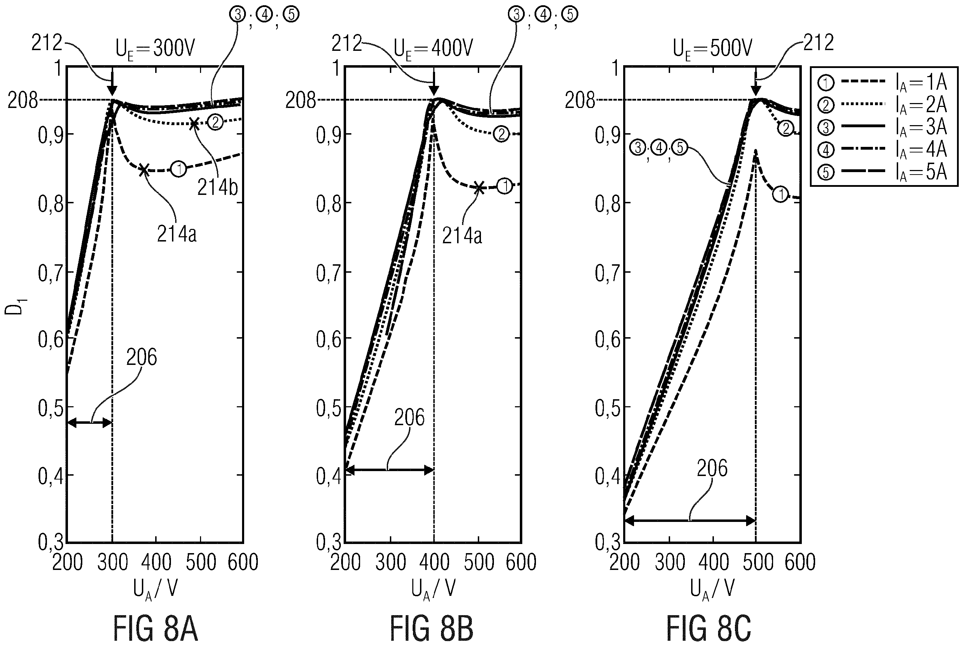

Nachfolgend wird Bezug genommen auf die Einstellung der Tastverhältnisse durch die Steuereinheit. Wie es anhand der Fig. 8a bis 8c erläutert wird, ist die Steuereinheit ausgebildet, um ausgehend von einer Situation 206, bei der die Ausgangsspannung $U_A$ kleiner ist als die Eingangsspannung $U_E$, das Tastverhältnis $D_1$ mit steigender Ausgangsspannung $U_A$ zu vergrößern. Die Steuereinheit ist ausgebildet, um das Tastverhältnis $D_1$ so zu erhöhen, dass ein Maximalwert 208 in einer Situation 212 erhalten wird, in der die Ausgangsspannung $U_A$ der Eingangsspannung $U_E$ entspricht.

Bei einer über die Situation 212 steigenden Ausgangsspannung $U_A$ ist die Steuereinheit beispielsweise ausgebildet, um das Tastverhältnis $D_1$ zu verringern. Ein Umfang oder eine Intensität, d.h. eine Geschwindigkeit dieser Verringerung erfolgt in einem geringeren Umfang als eine Verringerung des Tastverhältnisses $D_1$ bei von der Situation 212 ausgehenden Verringerung der Ausgangsspannung $U_A$. Die Steuereinheit kann ausgebildet sein, um ausgehend von der Situation 212 hin zu der Situation 206 das Tastverhältnis $D_1$ in einem gleichen oder vergleichbaren Maß zu reduzieren, wie es ausgehend von der Situation 206 hin zu der Situation 212 erhöht wurde.

In anderen Worten kann die Steuereinheit ausgebildet sein, um das Tastverhältnis $D_1$ mit Erhöhung der Ausgangsspannung $U_A$ schnell zu vergrößern, wenn die Ausgangsspannung $U_A$ niedriger ist als die Eingangsspannung $U_E$. Wenn die Ausgangsspannung $U_A$ größer ist als die Eingangsspannung $U_E$, so ist die Steuereinheit ausgebildet, um das Tastverhältnis $D_1$ ausgehend von der Situation 212 mit Erhöhung der Ausgangsspannung $U_A$ zuerst zu reduzieren. Überschreitet die Ausgangsspannung $U_A$ einen Referenzpunkt 214i, der für jede Kombination aus Ausgangsspannung $U_A$, Eingangsspannung $U_E$ und Ausgangsstrom $I_A$ bestimmbar ist, so kann die Steuereinheit ausgebildet sein, um das Tastverhältnis $D_1$ wieder leicht zu erhöhen. In einem Arbeitspunkt, bei dem die Ausgangsspannung $U_A$ gleich der Eingangsspannung $U_E$ ist, kann die Steuereinheit ausgebildet sein, um das Tastverhältnis $D_1$ gemäß dem Maximalwert 208 einzustellen. Der Maximalwert kann bspw. in einem Bereich zwischen 0,3 und 1, zwischen 0,6 und 0,99 oder zwischen 0,9 und 0,97 liegen. Die Steuereinheit kann ferner ausgebildet sein, um das Tastverhältnis $D_1$ mit einer Erhöhung eines Betragswerts des Ausgangsstroms $I_A$ zu erhöhen, wie es beispielsweise in Fig. 8c ersichtlich ist. Mit einer Vergrößerung der Differenz zwischen Eingangs- und Ausgangsspannung ist die Steuereinheit konfiguriert, um das Tastverhältnis $D_1$ zu reduzieren. In einem Bereich, in dem die Ausgangsspannung niedriger ist als die Eingangsspannung, ist die Steuereinheit konfiguriert, um das Tastverhältnis $D_1$ sehr schnell zu ändern, d.h. zu reduzieren. In dem Bereich, in dem die Ausgangsspannung größer ist als die Eingangsspannung, ist die Steuereinheit konfiguriert, um das Tastverhältnis $D_1$ relativ langsam zu ändern.

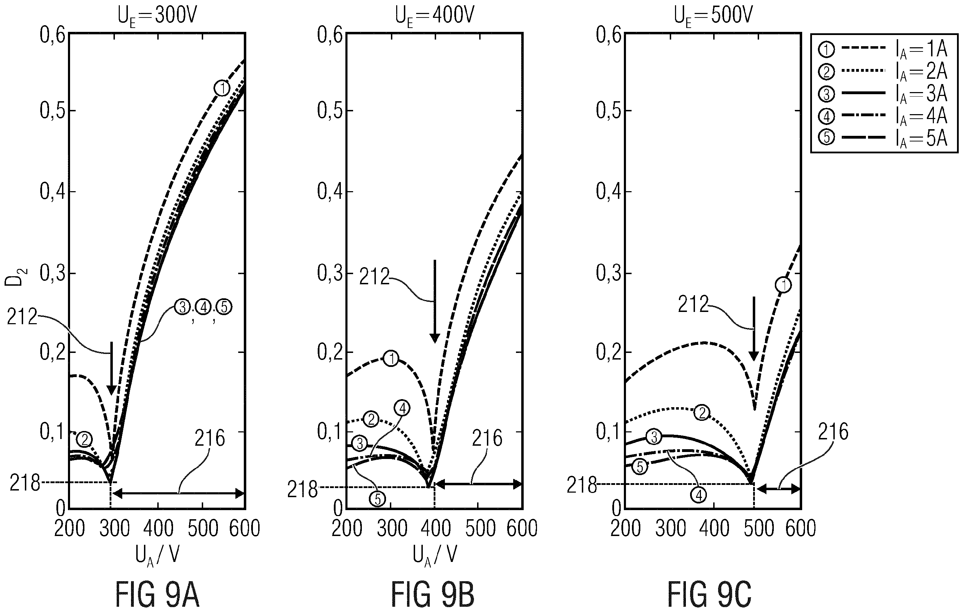

Die Fig. 9a bis 9c zeigen schematische Verläufe für das von der Steuereinheit eingestellte Tastverhältnis $D_2$ bei positivem Ausgangsstrom $I_A$. Gemäß einem Ausführungsbeispiel ist die Steuereinheit ausgebildet, um ausgehend von einer Situation 216, bei der die Ausgangsspannung $U_A$ größer ist als die Eingangsspannung $U_E$, das Tastverhältnis $D_2$ mit sinkender Ausgangsspannung $U_A$ bis auf einen Minimalwert 218 zu verkleinern. Der Minimalwert 218 kann beispielsweise von der Steuereinheit eingestellt werden, wenn die Situation 212 vorliegt, d.h. wenn die Ausgangsspannung $U_A$ der Eingangsspannung $U_E$ entspricht. Ausgehend von der Situation 212 kann die Steuereinheit ausgebildet sein, um bei sinkender Ausgangsspannung $U_A$ das Tastverhältnis $D_2$ weniger stark zu steigern als bei ansteigender Ausgangsspannung $U_A$. Beispielsweise kann jeder Kurvenverlauf 1 bis 5 der jeweiligen Fig. 9a, 9b bzw. 9c einen Verlauf des von der Steuereinheit eingestellten Tastverhältnisses $D_2$ angeben, der bei einem Anliegen der Ausgangsspannung $U_A$, der Eingangsspannung $U_E$ und des Ausgangsstroms $I_A$ eingestellt wird. Die Steuereinheit kann ferner ausgebildet sein, um die Tastverhältnisse $D_1$ und/oder $D_2$ so einzustellen, dass die Bedingung $U_A/U_E = D_1/(1-D_2)$ im Wesentlichen erfüllt ist. Das bedeutet, dass die Bedingung zumindest in einem Toleranzbereich von höchstens 15%, höchstens 10% oder höchstens 5% für die Tastverhältnisse $D_1$ und/oder $D_2$ erfüllt ist.

In anderen Worten kann die Steuereinheit ausgebildet sein, um das Tastverhältnis $D_2$ mit Erhöhung der Ausgangsspannung $U_A$ zuerst zu vergrößern und dann zu reduzieren, wenn die Ausgangsspannung $U_A$ niedriger ist als die Eingangsspannung $U_E$. Die Reduzierung kann bis zum Arbeitspunkt erfolgen, indem die Ausgangsspannung $U_A$ gleich der Eingangsspannung $U_E$ ist. Wenn die Ausgangsspannung $U_A$ größer ist als die Eingangsspannung $U_E$, kann die Steuereinheit ausgebildet sein, um das Tastverhältnis $D_2$ mit Erhöhung der Ausgangsspannung $U_A$ schnell zu erhöhen. Im Arbeitspunkt, bei dem die Ausgangsspannung $U_A$ gleich der Eingangsspannung $U_E$ ist, ist die Steuereinheit ausgebildet, um das minimale Tastverhältnis 218 einzustellen. Der Minimalwert kann bspw. in einem Bereich zwischen 0 und 1, zwischen 0,01 und 0,3 oder zwischen 0,015 und 0,2 liegen. Ein Wert des Tastverhältnisses $D_2$ kann über die in Gleichung 3 angegebene Beziehung mit dem Wert des Tastverhältnisses $D_1$ zusammenhängen, so dass ein Tastverhältnis aus einem bestimmten anderen Tastverhältnis bestimmbar ist. Mit Erhöhung des Betrags des Ausgangsstroms $I_A$ ist die Steuereinheit ausgebildet, um das Tastverhältnis $D_2$ zu reduzieren, wie es beispielsweise in den Fig. 9a bis 9c zwischen den Kurven 1 und 2 ersichtlich ist.

Nachfolgend wird Bezug genommen auf eine Einstellung der Zeitverzögerung $t_v$ durch die Steuereinheit.

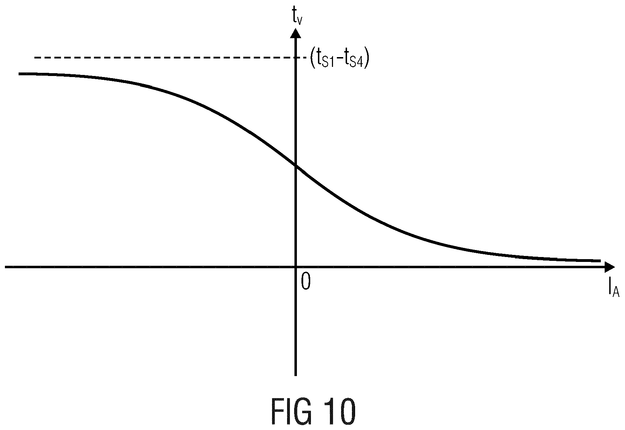

Fig. 10 zeigt schematisch einen Verlauf einer von der Steuereinheit eingestellten Zeitverzögerung $t_v$ über einen Verlauf des Ausgangsstroms $I_A$. Die Steuereinheit ist ausgebildet, um die Zeitverzögerung bei einem ansteigenden Ausgangsstrom $I_A$ zu verringern. Beispielsweise kann der Verlauf der Zeitverzögerung $t_v$ bei negativen Ausgangsströmen $I_A$ asymptotisch gegen den Wert einer Zeitdifferenz der Zeitdauern $t_{S1} - t_{S4}$ verlaufen. Bei positiven Ausgangsströmen kann der Wert beispielsweise asymptotisch gegen einen Wert null verlaufen. Alternativ kann ein Wert größer null als Minimalwert implementiert sein und/oder ein geringerer Wert $t_v$ als ($t_{S1} - t_{s4}$) als Maximalwert implementiert sein. Alternativ zu dem dargestellten Verlauf kann auch ein linearer oder beliebiger anderer Verlauf der Zeitverzögerung von der Steuereinheit implementiert sein. Gegenüber den eingangs erwähnten bekannten Konzepten ermöglicht eine vorangehend beschriebene Anpassung der Schaltfrequenz, der Tastverhältnisse und der Zeitverzögerung, dass eine hohe Effizienz des Tief-Hochsetzstellers erhalten wird, da auf eine harte Schaltung der Schalter verzichtet wird. Die Steuereinheit kann ausgebildet sein, um bei einem negativen Ausgangsstrom $I_A$ des schaltenden Gleichspannungswandlers die Zeitverzögerung $t_v$ zu erhöhen, wenn der Betrag des Ausgangsstroms $I_A$ steigt. Die Steuereinheit kann ausgebildet sein, um bei einem positiven Ausgangsstrom $I_A$ des schaltenden Gleichspannungswandlers die Zeitverzögerung $t_v$ zu reduzieren, wenn der Betrag des Ausgangsstroms $I_A$ steigt.

In anderen Worten kann die Steuereinheit ausgebildet sein, um bei einem positiven Ausgangsstrom $I_A$ die

Zeitverzögerung $t_v$ mit Vergrößerung von $I_A$ zu reduzieren, bis gleich oder etwas größer als null. Bei einem negativen Ausgangsstrom ist die Steuereinheit ausgebildet, um die Zeitverzögerung $t_v$ mit Vergrößerung des Betrags von $I_A$ bis gleich oder etwas kleiner als den Wert $t_{S1}$-$t_{s4}$.

Zur Verdeutlichung der erhaltbaren Effizienz werden nachfolgend einige mathematische Erläuterungen dargelegt. Zur Erzielung einer maximalen Effizienz eines Tief-Hochsetzstellers gehört eine Minimierung der Leistungsverluste $P_V$ in dem Tief-Hochsetzsteller. Die Leistungsverluste $P_V$ bestehen überwiegend aus folgenden Teilen:

- Schaltverluste $P_{SS}$ in den Schaltern
- Durchlassverluste $P_{SD}$ in den Schaltern
- Kernverluste $P_{LK}$ in der Speicherdrossel
- Durchlassverluste (oder ohmsche Verluste) $P_{LD}$ in der Speicherdrossel
- Verluste $P_{CE}$ im Eingangskondensator
- Verluste $P_{CA}$ im Ausgangskondensator

Die Leistungsverluste können dargestellt werden als

$$P_V = P_{SS} + P_{SD} + P_{LK} + P_{LD} + P_{CE} + P_{CA}$$

$$(10)$$

Mit hierin beschriebenen Konzepten können die Bedingungen unter Gleichung 9 erfüllt werden, so dass die Schalter $S_1$ bis $S_4$ stets ZVS-entlastet, d.h. näherungsweise verlustlos, umgeschaltet werden können. Unter diesen zwei Bedingungen ergibt sich näherungsweise, dass $P_{SS}=0$.

Ferner sind die Durchlassverluste in den Schaltern und in der Speicherdrossel, die Kernverluste in der Speicherdrossel und die Verluste in den Ein- und Ausgangskondensatoren alle vom Verlauf des Speicherdrosselstroms $I_L$ abhängig. Je kleiner der Effektivwert $I_{L,eff}$ von $I_L$ ist, desto kleiner sind die Verluste $P_{SD}$, $P_{LK}$, $P_{LD}$, $P_{CE}$ und $P_{CA}$. Folglich kann der Effektivwert $I_{L,eff}$ unter den zwei Bedingungen der Gleichung 9 minimiert werden, um eine hohe bis maximale Effizienz zu erzielen.

Darüber hinaus kann dargestellt werden, dass der Effektivwert $I_{L,eff}$ bei einem Arbeitspunkt ($U_E$, $U_A$, $I_A$) eine Funktion der Schaltfrequenz f, der Zeitverzögerung $t_v$ und der Tastverhältnisse $D_1$ und $D_2$ ist. Der Effektivwert $I_{L,eff}$ kann beispielsweise als eine Funktion wie folgt definiert werden:

$$I_{L,eff}(x), x = \{x_1 = f, x_2 = t_V, x_3 = D_1, x_4 = D_2\}$$

$$(11)$$

Unter Berücksichtigung der Bedingung gemäß Gleichung 3 für die Tastverhältnisse $D_1$ und $D_2$ kann das nachfolgend dargestellte Optimierungsproblem auch formuliert und gelöst werden, um die hohe bzw. maximale Effizienz bei einem Arbeitspunkt ($U_E$, $U_A$, $I_A$) zu erhalten:
Minimieren von $I_{L,eff}$ (x),x = $\{x_1 = f, x_2 = t_v, x_3 = D_1, x_4 = D_2\}$ unter:

$$\text{Bedingung 1: } max(i_L(t_2), i_L(t_{13})) \leq -I_0$$

$$\text{Bedingung 2: } min(i_L(t_6), i_L(t_9)) \geq I_0$$

$$\text{Bedingung 3: } \frac{x_3}{1-x_4} = \frac{U_A}{U_E}$$

$$\text{Bedingung 4: } 0 \leq x_2 \leq \frac{x_3-x_4}{x_1}$$

$$(12)$$

Die zuvor beschriebenen optimalen Schaltfrequenzen, optimale Zeitverzögerung und die optimalen Tastverhältnisse können Lösungen dieses Optimierungsproblems darstellen.

Gemäß den Gleichungen 9 und 12 ist ein Wert $I_0$ Teil des Optimierungsproblems. Vorzugsweise ist der Wert des Stroms $I_0$ innerhalb eines Wertebereichs, der als moderat bezeichnet werden kann, d. h., größer als 0 jedoch kleiner als ein Maximalwert. So kann der Effekt auftreten, dass die Kapazitäten $C_1$ bis $C_4$ nicht innerhalb der Totzeiten umgeladen werden, wenn der Strom $I_0$ kleiner als erforderlich ist. Dies kann dazu führen, dass die Schalter nicht ZVS-entlastet, d.h. verlustarm oder verlustlos umgeschaltet werden. Wenn der Wert des Stroms $I_0$ größer als erforderlich ist, können die Schalter $S_1$ bis $S_4$ zwar verlustlos umgeschaltet werden. Jedoch kann der Effektivwert $I_{L,eff}$ größer werden als notwendig, so dass die Effizienz des Gleichspannungswandlers verschlechtert wird. Ein geeigneter Wert des Stroms $I_0$ kann beispielsweise wie nachfolgend beschrieben bestimmt werden.

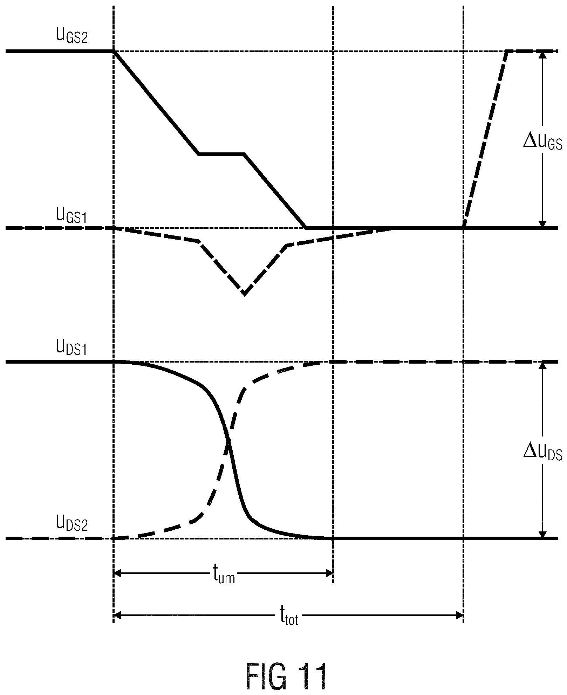

Unter der Annahme, dass MOSFETs als Schalter für den Tief-Hochsetzsteller eingesetzt werden, können die Spannungsverläufe eines Kommutierungsvorgangs während der Totzeit $t_{tot}$ zwischen dem Ausschalten des Schalters $S_2$ und dem Einschalten des Schalters $S_1$ wie in Fig. 11 dargestellten werden. Bei den dargestellten Verläufen bezeichnet $u_{GS1}$ die Gate-Source-Spannung des Schalters $S_1$, $u_{GS2}$ bezeichnet die Gate-Source-Spannung des Schalters $S_2$, $u_{DS1}$ bezeichnet die Drain-Source-Spannung des Schalters $S_1$, $u_{DS2}$ bezeichnet die Drain-Source-Spannung des Schalters $S_2$, $\Delta u_{GS}$ bezeichnet die Änderung der Gate-Source-Spannung, $\Delta u_{Ds}$ bezeichnet die Änderung der Drain-Source-Spannungen, $t_{tot}$ bezeichnet die Totzeit und $t_{um}$ bezeichnet die Zeitdauer des Umladens der Kapazitäten. Während einer Zeitspanne $t_{um}$ werden die Kapazitäten $C_1$ und $C_2$ vom Speicherdrosselstrom $i_L$ komplett umgeladen. Da die Änderung des Stroms $i_L$ innerhalb der Totzeit sehr klein ist, kann angenommen werden, dass $i_L$ innerhalb $t_{um}$ konstant bleibt und gleich einem Wert $I_{L,tot}$ ist. Somit kann gelten, dass:

$$I_{L,tot} = 2 \cdot \frac{\Delta Q_{oss}}{t_{um}}$$

$$(13)$$

$\Delta Q_{OSS}$ bezeichnet dabei die Änderung der Ladungsmenge in einer Ausgangskapazität $C_{OSS}$.

Die Ausgangskapazität $C_{OSS}$ eines MOSFETs kann als Funktion der Drain-Source-Spannung $u_{ds}$ formuliert werden, so dass gilt:

$$C_{oss} = f(u_{DS})$$

$$(14)$$

Dementsprechend ist die Änderung der Ladungsmenge $\Delta Q_{OSS}$ mit einer Änderung Drain-Source-Spannung $\Delta u_{DS}$ verknüpft:

$$\Delta Q_{oss} = \int_0^{\Delta u_{DS}} C_{oss}\, du_{DS} = \int_0^{\Delta u_{DS}} f(u_{DS})\, du_{DS}$$

$$(15)$$

Durch Einsetzen der Gleichung 15 in Gleichung 13 ergibt sich:

$$I_{L,tot} = 2 \cdot \frac{\int_0^{\Delta u_{DS}} f(u_{DS})\, du_{DS}}{t_{um}}$$

$$(16)$$

Da die Änderung der Drain-Source-Spannung $\Delta u_{DS}$ der Schalter $S_1$ und $S_2$ gleich der Eingangsspannung $U_E$ ist und die Änderung einer entsprechenden Spannung der Schalter $S_3$ und $S_4$ gleich der Ausgangsspannung $U_A$ ist, kann zur Bestimmung eines geeigneten Wertes des Stroms $I_0$ der größere Wert zwischen $U_E$ und $U_A$ für $\Delta u_{DS}$ eingesetzt werden. Darüber hinaus kann es erforderlich sein, dass die Umladungszeit $t_{um}$ kürzer als die Totzeit $t_{tot}$ ist. Daraus ergibt sich, dass:

$$I_{\mathrm{L,tot}} \geq 2 \cdot \frac{\int_0^{\max(U_{\mathrm{E}},\, U_{\mathrm{A}})} f(u_{\mathrm{DS}})\, du_{\mathrm{DS}}}{t_{\mathrm{tot}}}$$

$$(17)$$

Ein optimaler Wert für $I_0$ ergibt sich somit zu

$$I_0 = 2 \cdot \frac{\int_0^{\max(U_{\mathrm{E}},\, U_{\mathrm{A}})} f(u_{\mathrm{DS}})\, du_{\mathrm{DS}}}{t_{\mathrm{tot}}}$$

$$(18)$$

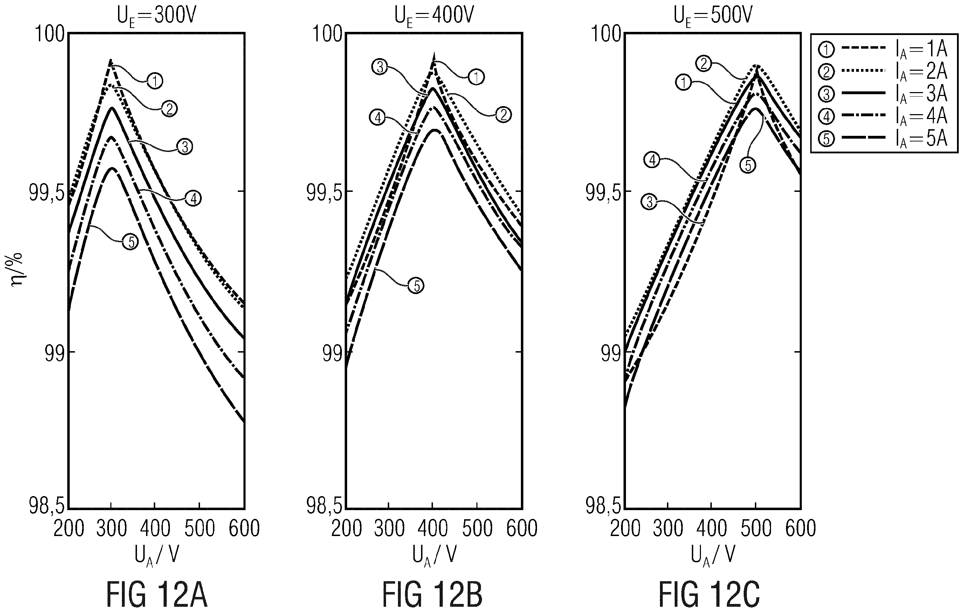

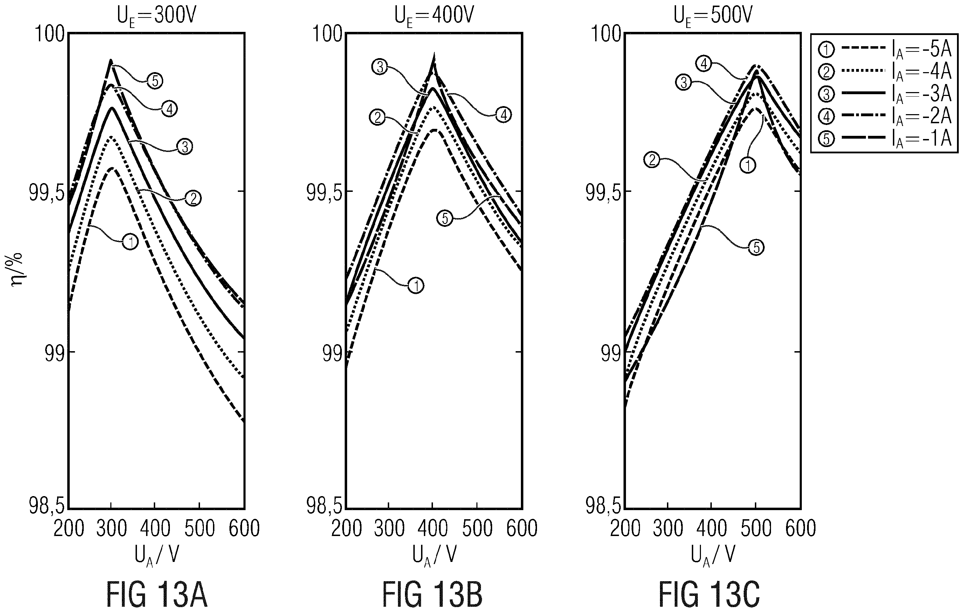

Das vorangehend beschriebene Konzept zum Schalten von Schaltern eines geschalteten Gleichspannungswandlers ermöglicht einen hohen Wirkungsgrad, wie es durch die Fig. 12a bis 12c für einen positiven Ausgangsstrom $I_A$ und in den Fig. 13a bis 13c für negative Ausgangsströme $I_A$ verdeutlicht ist. Der entsprechend geschaltete Tief-Hochsetzsteller erreicht in allen Figuren einen Wirkungsgrad $\eta$ von über 99,5% für den Fall, dass die Eingangsspannung $U_E$ gleich der Ausgangsspannung $U_A$ ist. Mit Reduzierung des Betrags des Ausgangsstroms steigt der Wirkungsgrad. In den meisten Arbeitspunkten kann ein Wirkungsgrad von über 99% erhalten werden.

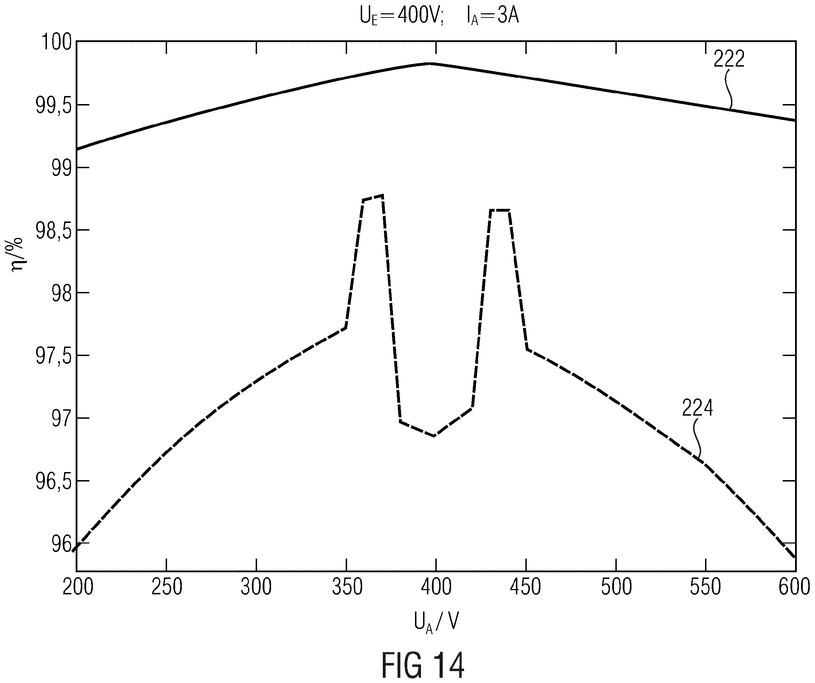

Fig. 14 zeigt einen Vergleich von Wirkungsgraden zwischen dem vorangehend beschriebenen Konzept zum Schalten eines schaltenden Gleichspannungswandlers und einem bekannten Konzept gemäß dem Stand der Technik. Der Vergleich ist unter anderem unter folgenden Bedingungen durchgeführt: es wurde der gleiche MOSFET für die Schalter eingesetzt, die Eingangsspannung $U_E$ beträgt 400V, der Ausgangsstrom $I_A$ beträgt 3A. Die Ausgangsspannung wird zwischen 200V und 600V variiert. Ein Verlauf 222 des Wirkungsgrads $\eta$ ist in allen dargestellten Arbeitspunkten größer als ein Verlauf 224 des Wirkungsgrads $\eta$ eines hartschaltenden Konzepts.

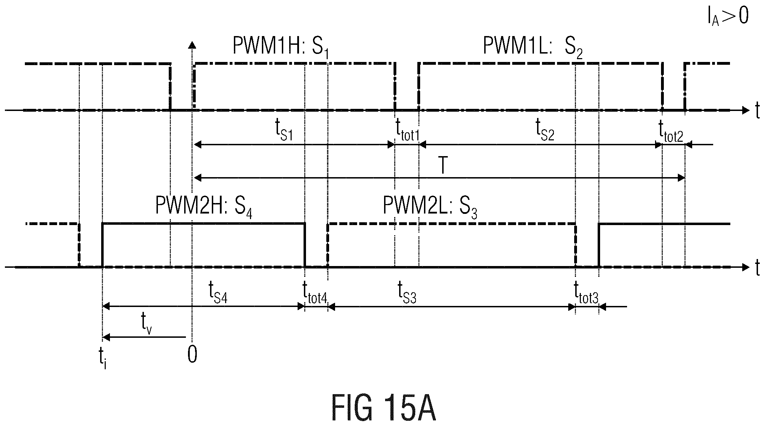

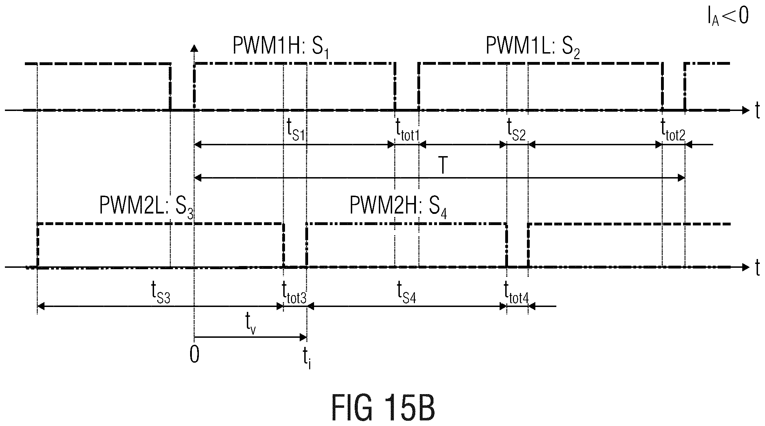

Nachfolgend wird Bezug genommen auf ein weiteres Konzept zum Ansteuern der Schalter $S_1$ bis $S_4$, wie es durch die Steuereinheit 112 implementierbar ist. Die Steuereinheit kann ausgebildet sein, um die Schalter $S_1$ und $S_2$ durch komplementäre Signale PWM1H und PWM1L anzusteuern. Die Einschaltzeit von $S_1$ innerhalb einer Schaltperiode T ist $t_{S1}$, d.h. innerhalb der Schaltperiode T ist der Schalter $S_1$ für die Zeitdauer $t_{S1}$ leitend geschaltet. Die Einschaltzeit des Schalters $S_2$ innerhalb der Schaltperiode ist $t_{S2}$. Die Schalter $S_4$ und $S_3$ werden durch die komplementären Signale PWM2H und PWM2L angesteuert. Die Einschaltzeit des Schalters $S_4$ innerhalb einer Schaltperiode T ist $t_{S4}$. Die Einschaltzeit des Schalters $S_3$ innerhalb einer Schaltperiode ist $t_{S3}$. Gemäß dem zweiten Konzept sind die Einschaltzeiten der Schalter $S_1$ und $S_4$ im Wesentlichen identisch, so dass näherungsweise, d.h. innerhalb eines Toleranzbereichs von höchstens 15%, höchstens 10% oder höchstens 5%, gilt, dass $t_{S2} = t_{S4}$. Dementsprechend kann ebenfalls gelten, dass die Einschaltzeit der Schalter $S_2$ und $S_3$ im Wesentlichen identisch ist, so dass näherungsweise gilt, dass $t_{S2} = t_{S3}$. Das bedeutet, die Steuereinheit ist gemäß dem zweiten Konzept konfiguriert, um das erste Tastverhältnis und das zweite Tastverhältnis so zu bestimmen und/oder einzustellen, dass das erste Tastverhältnis in jedem Betriebspunkt des geschalteten Spannungswandlers dem zweiten Tastverhältnis entspricht. Dies ist beispielsweise für $D_1$ gleich 0,5 erfüllt. Hier kann die Steuereinheit eine gegenüber dem vorangehend beschriebenen Konzept veränderte Variation der Zeitverzögerung $t_v$ ausführen. Wie es anhand der Fig. 15a und 15b beschrieben ist, kann ausgehend von einem Zeitpunkt 0, zu dem der Schalter $S_1$ eingeschaltet wird, die Zeitverzögerung negativ sein, das bedeutet, der Schalter $S_4$ wird vor dem Schalter $S_1$ eingeschaltet und ist zum Zeitpunkt 0 eingeschaltet. Dies gilt, wie es beispielsweise in Fig. 15a angedeutet ist, für positive Ausgangsströme $I_A$. Liegen negative Ausgangsströme $I_A$ vor, so kann die Zeitverzögerung $t_v$ positiv sein, das bedeutet, der Schalter $S_4$ wird nach dem Schalter $S_1$ eingeschaltet und ist zum Zeitpunkt 0 ausgeschaltet. In anderen Worten kann die Steuereinheit ausgebildet sein, um bei einem positiven Ausgangsstrom (siehe Fig. 15a) den Schalter $S_4$ früher als den Schalter $S_1$ einzuschalten.

Beispielsweise kann definiert werden, dass der Einschaltzeitpunkt des Schalters $S_1$ den Zeitpunkt 0 bezeichnet und der Einschaltzeitpunkt des Schalters $S_4$ $t_i$ ist. In diesem Fall gilt, dass $-t_{S1} < t_i < 0$. eine Reihenfolge der Schaltvorgänge der Schalter in diesem Fall kann lauten: $S_4$ eingeschaltet; $S_2$ ausgeschaltet; $S_1$ eingeschaltet; $S_4$ ausgeschaltet und $S_3$ eingeschaltet; $S_1$ ausgeschaltet; $S_2$ eingeschaltet; $S_3$ ausgeschaltet; $S_4$ eingeschaltet.

Bei einem negativen Ausgangsstrom, wie es in Fig. 15b dargestellt ist, kann der Schalter $S_4$ später als der Schalter $S_3$ eingeschaltet werden. Wenn erneut definiert wird, dass der Einschaltzeitpunkt des Schalters $S_1$ null ist und der Einschaltzeitpunkt des Schalters $S_4$ mit $t_i$ bezeichnet ist, dann kann gelten, dass $0 < t_i < t_{S1}$ ist. Die Reihenfolge der Schaltvorgänge der Schalter kann dann lauten: $S_1$ eingeschaltet; $S_3$ ausgeschaltet; $S_4$ eingeschaltet, $S_1$ ausgeschaltet; $S_2$ eingeschaltet; $S_4$ ausgeschaltet; $S_3$ eingeschaltet; $S_2$ ausgeschaltet; $S_1$ eingeschaltet.

Für die von der Steuereinheit eingestellten Tastverhältnisse kann gelten, dass $D = t_{S1}/T = t_{S4}/T$, so dass basierend auf dem Spannungsübersetzungsverhältnis ein Zusammenhang mit dem Tastverhältnis D ermittelbar ist, gemäß:

$$\frac{U_A}{U_E} = \frac{D}{1-D}$$

(19)

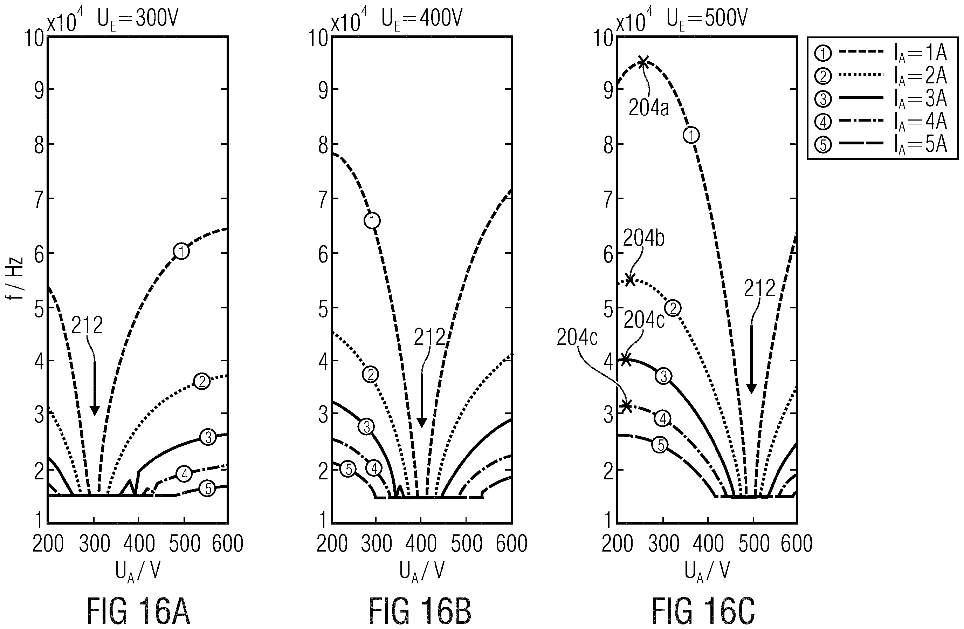

Die Fig. 16a bis 16c zeigen Verläufe von Schaltfrequenzen, mit der die Schalter des schaltenden Gleichspannungswandlers von der Steuereinheit gemäß dem zweiten Konzept steuerbar sind. Wie es im Zusammenhang mit den Fig. 6a bis 6c beschrieben ist, kann die Steuereinheit ausgebildet sein, um bei einer Vergrößerung der Differenz zwischen der Eingangsspannung $U_E$ und der Ausgangsspannung $U_A$ die Schaltfrequenz f schnell zu erhöhen und nach Durchlaufen von Referenzpunkten 204a-d wieder zu reduzieren. Darüber hinaus kann die Steuereinheit ausgebildet sein, um gemäß dem zweiten Konzept bei einem Anstieg des Betrags des Ausgangsstroms $I_A$ die Schaltfrequenz f zu reduzieren. Wie es im Zusammenhang mit den Fig. 6a bis 6c und 7a bis 7c beschrieben ist, kann die Steuereinheit ausgebildet sein, um die Reduzierungsgeschwindigkeit, mit der die Schaltfrequenz bei einer Erhöhung des Betrages des Ausgangsstroms $I_A$ verlangsamt wird, mit einer Erhöhung des Betrags des Ausgangsstroms $I_A$ zu reduzieren. Die Steuereinheit kann ferner ausgebildet sein, um bei einer Steigerung der Eingangsspannung $U_E$ die Schaltfrequenz f allmählich zu erhöhen. Für eine maximale und minimale Schaltfrequenz kann ebenfalls analog dem ersten Konzept gelten, dass die Steuereinheit ausgebildet ist, um die maximale Schaltfrequenz basierend auf einem verwendeten Leistungshalbleiter zu wählen. Die minimale Schaltfrequenz kann von der Steuereinheit so gewählt werden, dass Rippel der Ausgangsspannung und/oder ein Volumen der Schaltung begrenzt ist. Verglichen mit dem vorangehend beschriebenen ersten Konzept sind die in Fig. 16a, 16b bzw. 16c dargestellten von der Steuereinheit bestimmten optimalen Schaltfrequenzen deutlich niedriger, obwohl eine gleiche Induktivität L angeordnet ist.

Unterschiede zwischen den Konzepten ergeben sich beispielsweise bei der Bestimmung der Zeitverzögerung durch die Steuereinheit.

Wie es im Zusammenhang mit der Fig. 15a beschrieben ist, kann die Steuereinheit ausgebildet sein, um bei einem positiven Ausgangsstrom $I_A$ den Schalter $S_4$ vor dem Schalter $S_1$ einzuschalten. Bei einem negativen Ausgangsstrom kann die Steuereinheit, wie es im Zusammenhang mit der Fig. 15b beschrieben ist, ausgebildet sein, um dem Schalter $S_4$ später als den Schalter $S_1$ einzuschalten. Für die Zeitverzögerung $t_v$ kann beispielsweise gelten, dass

$$|t_v| = |0 - t_i| \text{ mit } t_i = \alpha \cdot T$$

(20)

wobei $\alpha$ der Zeitverzögerungsfaktor ist.

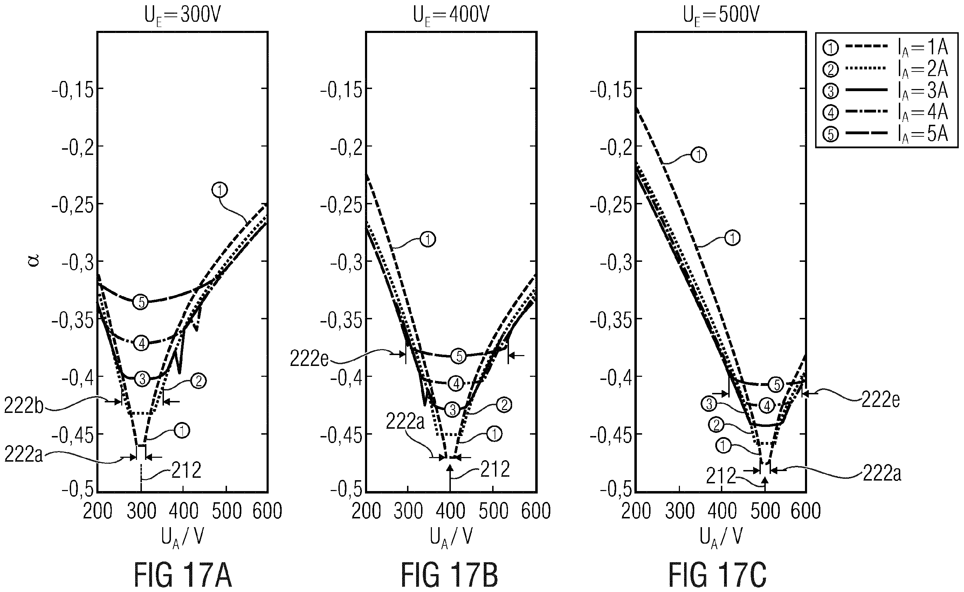

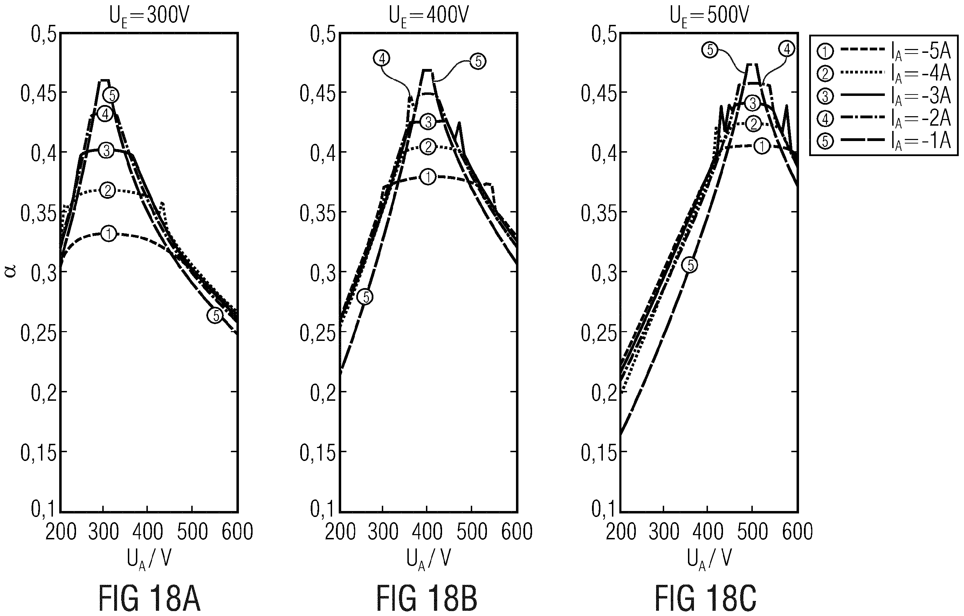

Die Fig. 17a bis 17c zeigen schematische Verläufe eines Zeitverzögerungsfaktors $\alpha$ bei jeweils verschiedenen Verhältnissen zwischen der Ausgangsspannung $U_A$ und der Eingangsspannung $U_E$ und über verschiedene Werte eines positiven Ausgangsstroms $I_A$. Fig. 18a bis 18c zeigen entsprechende Verläufe des Zeitverzögerungsfaktors $\alpha$ für negative Werte des Ausgangsstroms $I_A$. Die Zeitverzögerung $t_v$ kann beispielsweise als $\alpha$ multipliziert mit der Periodendauer T darstellbar sein, das bedeutet $t_v = \alpha T$. Für positive Ausgangsströme $I_A$ kann der Zeitverzögerungsfaktor $\alpha$ einen negativen Wert aufweisen, wie es in den Fig. 17a bis 17c ersichtlich ist. Für negative Ausgangsströme $I_A$ kann der Zeitverzögerungsfaktor $\alpha$ positive Werte aufweisen, wie es in den Fig. 18a bis 18c ersichtlich ist. Wird beispielsweise die Fig. 17a mit der Fig. 18a, die Fig. 17b mit der Fig. 18b oder die Fig. 17c mit der Fig. 18c verglichen, so wird ersichtlich, dass die jeweiligen Werte des Zeitverzögerungsfaktors $\alpha$ an einer Abszisse, die für den Zeitverzögerungsfaktors $\alpha$ den Wert null aufweist, im Wesentlichen gespiegelt sein können.

Für jede Kurve 1 bis 5 in jedem der Diagramme der Fig. 17a bis 17c und 18a bis 18c existiert ein Bereich 222i, der die Situation 212, d.h. die Ausgangsspannung $U_A$ entspricht der Eingangsspannung $U_E$, umfasst. Mit zunehmendem Betragswert des Stromes $I_A$ kann der Bereich 222i einen größeren Bereich der Ausgangsspannung $U_A$ umfassen. Innerhalb des Bereichs 222i ist die Steuereinheit ausgebildet, um den Zeitverzögerungsfaktors $\alpha$ im Wesentlichen unverändert zu lassen. Ausgehend von den Bereichen 222i ist die Steuereinheit beispielsweise ausgebildet, um bei zunehmender oder abnehmender Ausgangsspannung $U_A$ einen Betragswert des Zeitverzögerungsfaktors $\alpha$ zu reduzieren. Das bedeutet, eine Zeitdifferenz zwischen den Schaltvorgängen des Schalters $S_1$ und des Schalters $S_4$ wird reduziert. Die Steuereinheit kann ausgebildet sein, um den Betragswert des Zeitverzögerungsfaktors in einem Bereich zwischen 0 und 1, zwischen 0 und 0,8, zwischen 0 und 0,65, oder in einem Bereich zwischen 0 und 0,5 zu bestimmen. Die Steuereinheit kann ausgebildet sein, um einen Betragswert des Zeitverzögerungsfaktors bei zunehmender Ausgangsstromstärke $I_A$ zu reduzieren.

Das bedeutet, die Steuereinheit kann ausgebildet sein, um bei einem positiven Ausgangsstrom den Zeitverzögerungsfaktor $\alpha$ gemäß den Fig. 17a bis 17c zu modulieren. Bei einem negativen Ausgangsstrom kann die Steuereinheit ausgebildet sein, um den Zeitverzögerungsfaktor $\alpha$ gemäß den Fig. 18a bis 18c zu modulieren. Dies kann auch so verstanden werden, dass die Steuereinheit ausgebildet sein kann, um bei einem positiven Ausgangsstrom $I_A$ des schaltenden Gleichspannungswandlers den Schalter $S_1$ einzuschalten während der Schalter $S_4$ eingeschaltet ist, vgl. Fig. 15a, und um einen Betrag der Zeitverzögerung $t_v$ zu reduzieren, wenn der Betrag des Ausgangsstroms $I_A$ steigt, vgl. Fig. 17a bis 17c. Die Steuereinheit kann alternativ oder zusätzlich ausgebildet sein, um bei einem negativen Ausgangsstrom $I_A$ des schaltenden Gleichspannungswandlers den Schalter $S_4$ einzuschalten während der Schalter $S_1$ eingeschaltet ist, vgl. Fig. 15b, und um den Betrag der Zeitverzögerung $t_v$ zu erhöhen, wenn der Betrag des Ausgangsstroms $I_A$ steigt, vgl. Fig. 18a bis 18c.

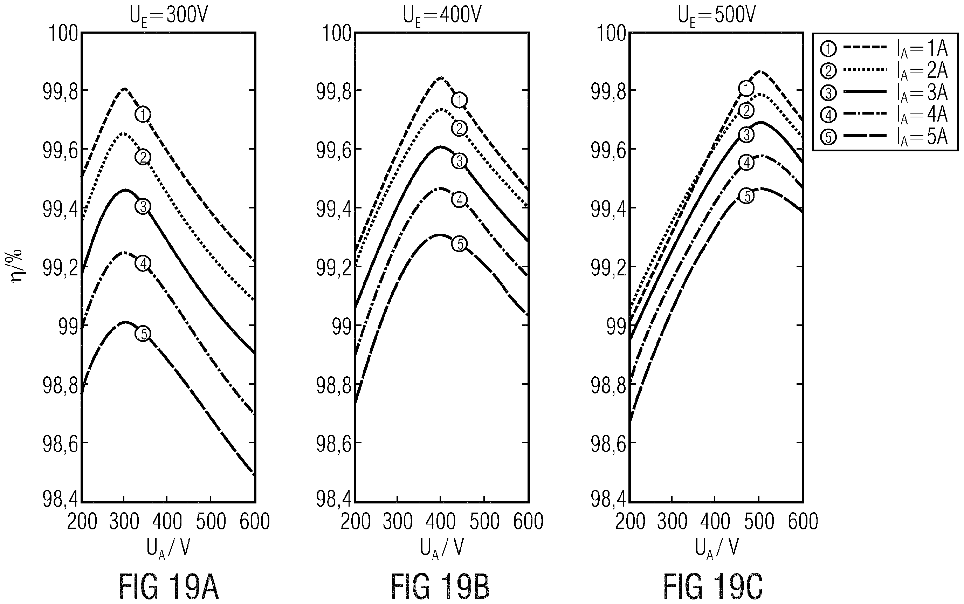

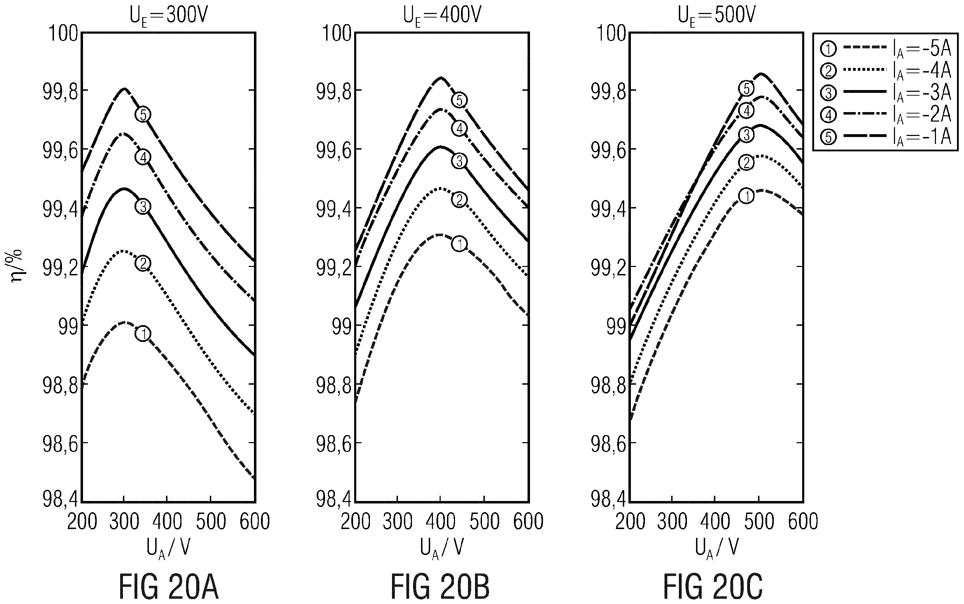

Die Fig. 19a bis 19c zeigen schematisch einen erzielbaren Wirkungsgrad $\eta$, wenn die Steuereinheit konfiguriert ist, um das zweite Konzept zu implementieren, für einen positiven Ausgangsstrom $I_A$. Die Fig. 20a bis 20c zeigen einen entsprechenden Wirkungsgrad $\eta$ in Prozent für negative Ausgangsströme $I_A$. In allen Fällen kann ein Wirkungsgrad von über 99,8% erhalten werden.

Zusammenfassend kann das erste Konzept so beschrieben werden, dass die Schalter jeweils einer Halbbrücke stets komplementär zueinander mit Berücksichtigung einer Totzeit getaktet werden, d. h. der Schalter $S_1$ wird komplementär zum Schalter $S_2$ geschaltet und der Schalter $S_4$ wird komplementär zum Schalter $S_3$ geschaltet. Der als Low-Side-Schalter eingesetzte Schalter $S_4$ der zweiten Halbbrücke wird beispielsweise nur innerhalb des Einschaltzustands des High-Side-Schalters $S_1$ der ersten Halbbrücke zunächst eingeschaltet und danach ausgeschaltet.

Unter diesen Voraussetzungen wird eine Spannungsreihenfolge "$U_E$-$U_A$; $U_E$; $U_E$-$U_A$; -$U_A$" an der Speicherdrossel angelegt, vgl. Fig. 5c. In Abhängigkeit der Arbeitspunkte ($U_E$, $U_A$, $I_A$) werden die Schaltfrequenz f, die Zeitverzögerung $t_v$ und die Tastverhältnisse $D_1$ und $D_2$ angepasst, d. h. moduliert. Dadurch wird erreicht, dass die vier Schalter in allen Arbeitspunkten stets spannungslos bzw. verlustarm oder verlustlos umgeschaltet werden. Die Verluste können so minimiert werden. Unter dieser Voraussetzung wird der Effektivwert des Speicherdrosselstroms ebenfalls minimiert. Die Verluste in der Speicherdrossel durch die Durchlassverluste in den Schaltern werden reduziert bzw. optimiert.

Die Anpassung (Modulation) der Schaltfrequenz f ist u.a. dadurch gekennzeichnet, dass für $U_A/U_E < 1$ die Schaltfrequenz mit zunehmender Ausgangsspannung $U_A$ zunächst erhöht wird und dann die Schaltfrequenz f mit zunehmender Ausgangsspannung $U_A$ wieder absinkt. In der Nähe des Punktes $U_A/U_E=1$ erreicht die Schaltfrequenz f ein Minimum. Für $U_A/U_E > 1$ wird die Schaltfrequenz f mit zunehmender Ausgangsspannung $U_A$ zunächst erhöht und für größere Ausgangsspannungen $U_A$ (größer als ein Referenzpunkt) wieder abgesenkt. Bei gleicher Eingangsspannung $U_E$ und Ausgangsspannung $U_A$ kann die Schaltfrequenz f mit Erhöhung des Betrags des Ausgangsstroms $I_A$ reduziert werden. Die Schaltfrequenz f kann begrenzt werden. Die maximale Schaltfrequenz kann von einer Schaltgeschwindigkeit der angeordneten Leistungshalbleiter ($S_1$-$S_4$) abhängig sein. Die minimale Schaltfrequenz kann so gewählt werden, dass Rippel der Ausgangsspannung $U_A$ bzw. das Volumen der Schaltung begrenzt ist.

Die Anpassung (Modulation) des Tastverhältnisses $D_1$ kann u. a. dadurch gekennzeichnet sein, dass das Tastverhältnis $D_1$ mit Erhöhung der Ausgangsspannung $U_A$ vergrößert wird, wenn die Ausgangsspannung kleiner ist als die Eingangsspannung $U_E$. Wenn $U_A > U_E$, kann das Tastverhältnis $D_1$ mit Erhöhung der Ausgangsspannung $U_A$ zunächst reduziert und dann langsam erhöht werden. In einem Spannungsbereich, in dem in etwa gilt, dass $U_A = U_E$, kann das Tastverhältnis $D_1$ maximal sein. Mit Erhöhung des Betrages des Ausgangsstroms $I_A$ kann das Tastverhältnis $D_1$ (bei ansonsten gleichen Spannungen) erhöht werden.

Die Anpassung (Modulation) des Tastverhältnisses $D_2$ ist u. a. dadurch gekennzeichnet, dass das Tastverhältnis $D_2$ mit Erhöhung der Ausgangsspannung $U_A$ zunächst erhöht und dann reduziert wird, wenn gilt, dass $U_A < U_E$. Wenn $U_A > U_E$, so kann das Tastverhältnis $D_2$ mit Erhöhung der Ausgangsspannung $U_A$ erhöht werden. Nahe des Bereichs, in dem gilt, dass $U_A = U_E$, kann das Tastverhältnis $D_2$ minimal sein. Mit Erhöhung des Betrags des Ausgangsstroms $I_A$ kann das Tastverhältnis $D_2$ reduziert werden.

Die Anpassung (Modulation) der Zeitverzögerung $t_v$ ist gemäß diesem Konzept u. a. dadurch gekennzeichnet, dass bei einem positiven Ausgangsstrom $I_A$ die Zeitverzögerung $t_v$ mit zunehmendem Ausgangsstrom $I_A$ reduziert wird. Bei einem negativen Ausgangsstrom $I_A$ wird die Zeitverzögerung $t_v$ mit zunehmendem Betrag des Ausgangsstroms $I_A$ erhöht.

Dahingegen kann das zweite Konzept, das durch die Steuereinheit implementierbar ist, so geschrieben werden, dass die Schalter jeweils einer Halbbrückenschaltung stets komplementär mit Berücksichtigung einer Totzeit zueinander getaktet sind, d. h. der Schalter $S_1$ wird komplementär zu dem Schalter $S_2$ und der Schalter $S_4$ wird komplementär zu dem Schalter $S_3$ geschaltet. Die Zeitdauer des Einschaltzustands des Schalters $S_1$ ist innerhalb eines Toleranzbereichs gleich der Zeitdauer des Einschaltzustands des Schalters $S_4$. Die Zeitdauer des Einschaltzustands des Schalters $S_2$ ist innerhalb eines Toleranzbereichs gleich der Zeitdauer des Einschaltzustands des Schalters $S_3$. Bei einem positiven Ausgangsstrom $I_A$ wird der Schalter $S_4$ früher eingeschaltet als der Schalter $S_1$. Bei negativem Ausgangsstrom wird der Schalter $S_4$ später eingeschaltet als der Schalter $S_1$. In Abhängigkeit der Arbeitspunkte ($U_E$, $U_A$, $I_A$) werden die Schaltfrequenz f, die Zeitverzögerung $t_v$ und die Tastverhältnisse D angepasst, d. h. moduliert. Dadurch wird erreicht, dass

die vier Schalter $S_1$-$S_4$ bei allen Arbeitspunkten immer spannungslos, d. h. verlustarm oder verlustlos umgeschaltet werden. Somit können Schaltverluste reduziert oder minimiert werden. Unter dieser Voraussetzung wird der Effektivwert des Speicherdrosselstroms ebenfalls reduziert oder minimiert. Die Verluste in der Speicherdrossel und die Durchlassverluste in den Schaltern werden somit optimiert.

Eine Ansteuereinheit und/oder ein geschalteter Gleichspanungswandler gemäß hierin beschriebener Ausführungsbeispiele können ausgebildet sein, um die Schalter gemäß dem ersten Konzept oder gemäß dem zweiten Konzept anzusteuern. Eine andere Ansteuereinheit und/oder ein anderer geschalteter Gleichspanungswandler gemäß hierin beschriebenen Ausführungsbeispielen können ausgebildet sein, um die Schalter gemäß dem ersten Konzept und gemäß dem zweiten Konzept anzusteuern. So können die Konzepte bspw. zeitlich wechselnd oder alternierend zueinander ausgeführt werden. Das erste Konzept bietet den Vorteil, dass ein höherer Wirkungsgrad erzielbar ist. Hierfür werden zumindest vier Parameter, die Schaltfrequenz, die beiden Tastverhältnisse und die Zeitverzögerung moduliert. Demgegenüber ermöglicht das zweite Konzept eine Ersparnis bezüglich Rechenaufwand und/oder Speicheraufwand, da zumindest drei Parameter, die Schaltfrequenz, ein gleiches Tastverhältnis und die Zeitverzögerung moduliert werden. Etwa kann zuerst das erste Konzept und anschließend das zweite Konzept ausgeführt werden.

Obwohl vorangehend beschriebene Ausführungsbeispiele eine Eingangsseite und eine Ausgangsseite des schaltenden Gleichspannungswandlers bezeichnen sei darauf hingewiesen, dass diese Bezeichnungen basierend auf einem symmetrischen Aufbau des schaltenden Gleichspannungswandlers wechselseitig vertauschbar sein können. Dies wird unter anderem durch einen simplen Wechsel zwischen den Hochsetzmodus und dem Tiefsetzmodus erhalten, wenn die Eingangsseite und die Ausgangsseite vertauscht werden.

Obwohl in vorangehenden Ausführungsbeispielen der Begriff Zeitpunkt verwendet wird, etwa für Schaltvorgänge in Schaltern, wird darauf hingewiesen, dass dies Zeitpunkte Zeitdauern mit kurzer, endlicher Länge beschreiben. So kann ein Zeitpunkt des Umschaltens eines Schalters als Zeitintervall verstanden werden, in dem ein Schalter von einem Zustand in einen anderen Zustand übergeht.

Obwohl in vorangehenden Ausführungsbeispielen die Eingangsspannung in Schrittweiten von 100 V veränderlich dargestellt ist, kann die Eingangsspannung in beliebigen Schrittweiten oder ohne Schrittweiten veränderlich sein.

Oben beschriebene und in den Figuren gezeigte Kurvenverläufe sollen eher exemplarisch und qualitativ als quantitativ verstanden werden. Es versteht sich, dass bei anderen als den hierin beschriebenen Ausführungsformen andere Ströme, andere Spannungen, andere Tastzyklen, andere Frequenzen oder andere Wirkungsgrade erhalten werden können. Auch können bspw. analog oder kontinuierlich dargestellte Kurvenverläufe quantisiert beschrieben oder in einem Speicher hinterlegt werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Vorrichtung (110) zum Steuern eines schaltenden Gleichspannungswandler (120) mit einer ersten Halbbrückenschaltung (130) umfassend einen ersten Schalter ($S_1$) und einen zweiten Schalter ($S_2$), mit einer zweiten Halbbrückenschaltung (140) umfassend einen dritten Schalter ($S_3$) und einen vierten Schalter ($S_4$), und einer Induktivität (L, 122), die zwischen die Mittenabgriffe (132, 142) der ersten und der zweiten Halbbrückenschaltung (130, 140) geschaltet ist, und die Folgendes umfasst:

eine Steuereinheit (112), die ausgebildet ist, um abhängig von einer Eingangsspannung ($U_E$) und einer Ausgangsspannung ($U_A$) an dem schaltenden Gleichspannungswandler (120) eine Schaltfrequenz ($f$) der Schalter ($S_1$-$S_4$) des Gleichspannungswandlers (120), ein erstes ($D_1$) und zweites ($D_2$) Tastverhältnis des ersten ($S_1$) und vierten ($S_4$) Schalters und die Zeitverzögerung ($t_v$) zwischen dem Einschalten des ersten ($S_1$) und vierten ($S_4$) Schalters anzupassen;
wobei die Steuereinheit (112) ferner ausgebildet ist, um die Schaltfrequenz ($f$), das erste Tastverhältnis ($D_1$), das zweite Tastverhältnis ($D_2$) und die Zeitverzögerung ($t_v$) basierend auf einem Ausgangsstrom ($I_A$) des schaltenden Gleichspannungswandlers (120) zu bestimmen;
dadurch kenngezeichnet, dass die Steuereinheit (112) zum Anpassen des ersten Tastverhältnisses ($D_1$) ferner ausgebildet ist, um ausgehend von einer ersten Situation (206), bei der die Ausgangsspannung ($U_A$) kleiner ist als die Eingangsspannung ($U_E$), das erste Tastverhältnis ($D_1$) mit steigender Ausgangsspannung ($U_A$) bis auf einen Maximalwert (208), wenn in einer zweiten Situation (212) die Ausgangsspannung ($U_A$) der Eingangsspannung ($U_E$) entspricht, zu vergrößern; und um ausgehend von der zweiten Situation (212) bei ansteigender Ausgangsspannung ($U_A$) das erste Tastverhältnis ($D_1$) weniger stark zu erniedrigen als bei abfallender Ausgangsspannung ($U_A$);
wobei die Steuereinheit (112) zum Anpassen des zweiten Tastverhältnisses ($D_2$) ferner ausgebildet ist, um ausgehend von einer dritten Situation (216), bei der die Ausgangsspannung ($U_A$) größer ist als die Eingangsspannung ($U_E$), das zweite Tastverhältnis ($D_2$) mit sinkender Ausgangsspannung ($U_A$) bis auf einen Minimalwert (218), wenn in einer zweiten Situation (212) die Ausgangsspannung ($U_A$) der Eingangsspannung ($U_E$) entspricht, zu verkleinern; und um ausgehend von der zweiten Situation (212) bei sinkender Ausgangsspannung ($U_A$) das zweite Tastverhältnis ($D_2$) weniger stark zu steigern als bei ansteigender Ausgangsspannung ($U_A$);
wobei die Steuereinheit (112) zum Anpassen der Schaltfrequenz ($f$) ferner ausgebildet ist, um ausgehend von der zweiten Situation (212), in der die Ausgangsspannung ($U_A$) der Eingangsspannung ($U_E$) entspricht, bei einer sinkenden oder steigenden Ausgangsspannung ($U_A$) die Schaltfrequenz ($f$) zu erhöhen, bis die Ausgangsspannung ($U_A$) einen Referenzwert (202a-c, 204a-e) erreicht hat, und um die Schaltfrequenz ($f$) zu reduzieren, wenn die Ausgangsspannung ($U_A$) den Referenzwert (202a-c, 204a-e) überschritten hat;
wobei die Steuereinheit (112) zum Anpassen der Zeitverzögerung ($t_v$) ferner ausgebildet ist, um die Zeitverzögerung ($t_v$) in einem Bereich zwischen 0 und einer Zeitdifferenz ($t_{S1}$-$t_{S4}$) zwischen einer ersten Zeitdauer ($t_{S1}$), in der der erste Schalter ($S_1$) innerhalb einer Periodendauer ($T$) eingeschaltet ist und einer zweiten Zeitdauer ($t_{S4}$), in der der vierte Schalter ($S_4$) innerhalb der Periodendauer ($T$) eingeschaltet ist, abhängig von einem Ausgangsstrom ($I_A$) des schaltenden Gleichspannungswandlers (120) zu bestimmen; und um bei einem negativen Ausgangsstrom ($I_A$) des schaltenden Gleichspannungswandlers (120) die Zeitverzögerung ($t_v$) zu erhöhen, wenn der Betrag des Ausgangsstroms ($I_A$) steigt und um bei einem positiven Ausgangsstrom ($I_A$) des schaltenden Gleichspannungswandlers (120) die Zeitverzögerung ($t_v$) zu reduzieren, wenn der Betrag des Ausgangsstroms ($I_A$) steigt; oder
wobei die Zeitverzögerung ($t_v$) als $t_v = \alpha T$ darstellbar ist, wobei $t_v$ die Zeitverzögerung, $\alpha$ ein Zeitverzögerungsfaktor und $T$ eine Periodendauer eines Schaltzyklus der Schalter ($S_1$-$S_4$) des schaltenden Gleichspannungswandlers (120) ist, und bei der die Steuereinheit (112) zum Anpassen der Zeitverzögerung ($t_v$) ferner ausgebildet ist, um ausgehend von einem Bereich (222a-e) der Ausgangsspannung ($U_A$), der eine zweite Situation (212) umfasst, in der die Ausgangsspannung ($U_A$) der Eingangsspannung ($U_E$) entspricht, bei zunehmender oder abnehmender Ausgangsspannung ($U_A$) einen Betragswert des Zeitverzögerungsfaktors (a) zu reduzieren um den Betragswert des Zeitverzögerungsfaktors (a) in einem Bereich zwischen 0 und 1 zu bestimmen; und, um bei einem positiven Ausgangsstrom ($I_A$) des schaltenden Gleichspannungswandlers (120) den ersten Schalter ($S_1$) einzuschalten während der vierte Schalter ($S_4$) eingeschaltet ist, und um einen Betrag der Zeitverzögerung ($t_v$) zu reduzieren, wenn der Betrag des Ausgangsstroms ($I_A$) steigt und bei der die Steuereinheit (112) ausgebildet ist, um bei einem negativen Ausgangsstrom ($I_A$) des schaltenden Gleichspannungswandlers (120) den vierten Schalter ($S_4$) einzuschalten während der erste Schalter ($S_1$) eingeschaltet ist, und um den Betrag der Zeitverzögerung ($t_v$) zu erhöhen, wenn der Betrag des Ausgangsstroms ($I_A$) steigt.

2. Vorrichtung gemäß Anspruch 1, bei der die Steuereinheit (112) ausgebildet ist, um den ersten Schalter ($S_1$), den zweiten Schalter ($S_2$), den dritten Schalter ($S_3$) und den vierten Schalter ($S_4$) mit von einander verschiedenen Zeitdauern ($t_{S1}$, $t_{S2}$, $t_{S3}$, $t_{S4}$) einzuschalten.

3. Vorrichtung gemäß Anspruch 1 oder 2, bei der die Steuereinheit (112) ausgebildet ist, um den vierten Schalter ($S_4$) nur in Zeitintervallen ($t_{S4}$) einzuschalten, in denen der erste Schalter ($S_1$) eingeschalten ist.

4. Vorrichtung gemäß einem der vorangehenden Ansprüche, bei der die Steuereinheit (112) ausgebildet ist, um das erste Tastverhältnis ($D_1$) und das zweite Tastverhältnis ($D_2$) so zu bestimmen, dass für das erste Tastverhältnis ($D_1$) und für das zweite Tastverhältnis ($D_2$) folgende Bedingung erfüllt ist:

$$\frac{U_A}{U_E} = \frac{D_1}{1 - D_2}$$

wobei $U_A$ die Ausgangsspannung, $U_E$ die Eingangsspannung, $D_1$ das erste Tastverhältnis und $D_2$ das zweite Tast-

verhältnis beschreibt.

5. Vorrichtung gemäß einem der vorangehenden Ansprüche, bei der die Steuereinheit (112) ausgebildet ist, um die Schalter ($S_1$-$S_4$) des schaltenden Gleichspannungswandlers (120) so anzusteuern, dass der zweite Schalter ($S_2$) stets ausgeschalten ist, wenn der vierte Schalter ($S_4$) eingeschalten ist.

6. Vorrichtung gemäß einem der Ansprüche 1 bis 4, bei der die Steuereinheit (112) ausgebildet ist, um das erste Tastverhältnis ($D_1$) und das zweite Tastverhältnis ($D_2$) so zu bestimmen, dass das erste Tastverhältnis ($D_1$) in jedem Betriebspunkt des geschalteten Spannungswandlers dem zweiten Tastverhältnis ($D_2$) entspricht.

7. Vorrichtung gemäß einem der vorangehenden Ansprüche, bei der die Steuereinheit (112) ausgebildet ist, um die Schaltfrequenz (f) abhängig von der Eingangsspannung ($U_E$) zu bestimmen.

8. Vorrichtung gemäß einem der vorangehenden Ansprüche, bei der die Steuereinheit (112) ausgebildet ist, um die Schaltfrequenz (f) bei einer Erhöhung eines Betrags eines Ausgangsstroms ($I_A$) des schaltenden Gleichspannungswandlers (120) zu reduzieren.

9. Vorrichtung gemäß einem der vorangehenden Ansprüche, mit einem Speicher, in dem Werte für die Schaltfrequenz (f), das erste ($D_1$) und zweite Tastverhältnis ($D_2$) und die Zeitverzögerung ($t_v$) in Abhängigkeit der Ausgangsspannung ($U_A$) und der Eingangsspannung ($U_E$) gespeichert sind, wobei die Steuereinheit (112) ausgebildet ist, um die Schalt-frequenz (f), das erste ($D_1$) und zweite Tastverhältnis ($D_2$) und die Zeitverzögerung ($t_v$) basierend auf den gespei-cherten Werten anzupassen.

10. Schaltender Gleichspannungswandler (100), mit
einer ersten Halbbrückenschaltung (130) umfassend einen ersten Schalter ($S_1$) und einen zweiten Schalter ($S_2$), einer zweiten Halbbrückenschaltung (140) umfassend einen dritten Schalter ($S_3$) und einen vierten Schalter ($S_4$), einer Induktivität (L, 122), die zwischen die Mittenabgriffe (132, 142) der ersten (130) und der zweiten (140) Halbbrückenschaltung geschaltet ist; und
einer Ansteuereinheit (110), gemäss Anspruch 1,

11. Schaltender Gleichspannungswandler gemäß Anspruch 10, bei der die Ansteuereinheit (110) ausgebildet ist, um den vierten Schalter ($S_4$) nur in Zeitintervallen ($t_{S4}$) einzuschalten, in denen der erste Schalter ($S_1$) eingeschalten ist.

12. Schaltender Gleichspannungswandler gemäß Anspruch 10 der einen Speicher (114) aufweist, in dem Werte für die Schaltfrequenz (f), das erste ($D_1$) und zweite Tastverhältnis ($D_2$) und die Zeitverzögerung ($t_v$) in Abhängigkeit der Ausgangsspannung ($U_A$) und der Eingangsspannung ($U_E$) gespeichert sind.

13. Verfahren zum Steuern eines geschalteten Gleichspannungswandlers (100; 120) mit folgenden Schritten:

Verbinden einer Steuereinheit (110) und einem schaltenden Gleichspannungswandler (120) mit einer ersten Halbbrückenschaltung (130) umfassend einen ersten Schalter ($S_1$) und einen zweiten Schalter ($S_2$), mit einer zweiten Halbbrückenschaltung (140) umfassend einen dritten Schalter ($S_3$) und einen vierten Schalter ($S_4$), und einer Induktivität (L, 122), die zwischen die Mittenabgriffe (132, 142) der ersten (130) und der zweiten (140) Halbbrückenschaltung geschaltet ist;
Anpassen einer Schaltfrequenz (f) der Schalter ($S_1$-$S_4$) des Gleichspannungswandlers (120), der Tastverhält-nisse ($D_1$, $D_2$) des ersten ($S_1$) und vierten ($S_4$) Schalters und der Zeitverzögerung ($t_v$) zwischen dem Einschalten des ersten ($S_1$) und vierten ($S_4$) Schalters abhängig von einer Eingangsspannung ($U_E$) und einer Ausgangsspannung ($U_A$) abhängig an dem schaltenden Gleichspannungswandler (120);
wobei das Anpassen der Schaltfrequenz (f), des ersten Tastverhältnisses ($D_1$), des zweiten Tastverhältnisses ($D_2$) und der Zeitverzögerung ($t_v$) basierend auf einem Ausgangsstrom ($I_A$) des schaltenden Gleichspannungswandlers (120) ausgeführt wird;
**dadurch gekennzeichnet, dass** zum Anpassen des ersten Tastverhältnisses ($D_1$), ausgehend von einer ersten Situation (206), bei der die Ausgangsspannung ($U_A$) kleiner ist als die Eingangsspannung ($U_E$), Vergrößern des ersten Tastverhältnisses ($D_1$) mit steigender Ausgangsspannung ($U_A$) bis auf einen Maximalwert (208), wenn in einer zweiten Situation (212) die Ausgangsspannung ($U_A$) der Eingangsspannung ($U_E$) entspricht; und ausgehend von der zweiten Situation (212) bei ansteigender Ausgangsspannung ($U_A$) Erniedrigen des ersten Tastverhältnisses ($D_1$) weniger stark als bei abfallender Ausgangsspannung ($U_A$);
zum Anpassen des zweiten Tastverhältnisses ($D_2$), ausgehend von einer dritten Situation (216), bei der die Ausgangsspannung ($U_A$) größer ist als die Eingangsspannung ($U_E$), Verkleinern des zweiten Tastverhältnisses ($D_2$) mit sinkender Ausgangsspannung ($U_A$) bis auf einen Minimalwert (218), wenn in einer zweiten Situation (212) die Ausgangsspannung ($U_A$) der Eingangsspannung ($U_E$) entspricht und um ausgehend von der zweiten Situation (212) bei sinkender Ausgangsspannung ($U_A$) Steigern des zweiten Tastverhältnisses ($D_2$) weniger stark als bei ansteigender Ausgangsspannung ($U_A$);

zum Anpassen der Schaltfrequenz (f), ausgehend von der zweiten Situation (212), in der die Ausgangsspannung ($U_A$) der Eingangsspannung ($U_E$) entspricht, bei einer sinkenden oder steigenden Ausgangsspannung ($U_A$) Erhöhen der Schaltfrequenz (f), bis die Ausgangsspannung ($U_A$) einen Referenzwert (202a-c, 204a-e) erreicht hat, und Reduzieren der Schaltfrequenz (f), wenn die Ausgangsspannung ($U_A$) den Referenzwert (202a-c, 204a-e) überschritten hat;

zum Anpassen der Zeitverzögerung ($t_v$), Bestimmen der Zeitverzögerung ($t_v$) in einem Bereich zwischen 0 und einer Zeitdifferenz ($t_{S1}$-$t_{S4}$) zwischen einer ersten Zeitdauer ($t_{S1}$), in der der erste Schalter ($S_1$) innerhalb einer Periodendauer (T) eingeschaltet ist und einer zweiten Zeitdauer ($t_{S4}$), in der der vierte Schalter ($S_4$) innerhalb der Periodendauer (T) eingeschaltet ist, abhängig von einem Ausgangsstrom ($I_A$) des schaltenden Gleichspannungswandlers (120); und bei einem negativen Ausgangsstrom ($I_A$) des schaltenden Gleichspannungswandlers (120) Erhöhen der Zeitverzögerung ($t_v$), wenn der Betrag des Ausgangsstroms ($I_A$) steigt und bei einem positiven Ausgangsstrom ($I_A$) des schaltenden Gleichspannungswandlers (120) Reduzieren der Zeitverzögerung ($t_v$), wenn der Betrag des Ausgangsstroms ($I_A$) steigt; oder

wobei die Zeitverzögerung ($t_v$) als $t_v = \alpha T$ darstellbar ist, wobei $t_v$ die Zeitverzögerung, $\alpha$ ein Zeitverzögerungsfaktor und T eine Periodendauer eines Schaltzyklus der Schalter ($S_1$-$S_4$) des schaltenden Gleichspannungswandlers (120) ist, und wobei zum Anpassen der Zeitverzögerung ($t_v$), ausgehend von einem Bereich (222a-e) der Ausgangsspannung ($U_A$), der eine zweite Situation (212) umfasst, in der die Ausgangsspannung ($U_A$) der Eingangsspannung ($U_E$) entspricht, bei zunehmender oder abnehmender Ausgangsspannung ($U_A$) Reduzieren eines Betragswerts des Zeitverzögerungsfaktors ($\alpha$); Bestimmen des Betragswerts des Zeitverzögerungsfaktors ($\alpha$) in einem Bereich zwischen 0 und 1; und, bei einem positiven Ausgangsstrom ($I_A$) des schaltenden Gleichspannungswandlers (120), Einschalten des ersten Schalters ($S_1$) während der vierte Schalter ($S_4$) eingeschaltet ist, und Reduzieren eines Betrags der Zeitverzögerung ($t_v$), wenn der Betrag des Ausgangsstroms ($I_A$) steigt und, bei einem negativen Ausgangsstrom ($I_A$) des schaltenden Gleichspannungswandlers (120), Einschalten des vierten Schalters ($S_4$) während der erste Schalter ($S_1$) eingeschaltet ist, und Erhöhen des Betrags der Zeitverzögerung ($t_v$), wenn der Betrag des Ausgangsstroms ($I_A$) steigt.

## Claims

1. Apparatus (110) for controlling a switching DC-DC converter (120) with a first half-bridge circuit (130) including a first switch ($S_1$) and a second switch ($S_2$), with a second half-bridge circuit (140) including a third switch ($S_3$) and a fourth switch ($S_4$) and an inductance (L, 122) connected between the center taps (132, 142) of the first and the second half-bridge circuit (130, 140), comprising:

   a control unit (112) that is configured to adapt, in dependence on an input voltage ($U_E$) and an output voltage ($U_A$) at the switching DC-DC converter (120), a switching frequency (f) of switches ($S_1$-$S_4$) of the DC-DC converter (120), a first ($D_1$) and a second ($D_2$) duty cycle of the first ($S_1$) and fourth ($S_4$) switch and the time delay ($t_v$) between switching on the first ($S_1$) and fourth ($S_4$) switch;
   wherein the control unit (112) is further configured to determine the switching frequency (f), the first duty cycle ($D_1$), the second duty cycle ($D_2$) and the time delay ($t_v$) based on an output current ($I_A$) of the switching DC-DC converter (120);
   **characterized in that**
   the control unit (112) for adapting the first duty cycle ($D_1$) is further configured to increase, starting from a first situation (206) where the output voltage ($U_A$) is lower than the input voltage ($U_E$), the first duty cycle ($D_1$) at an increasing output voltage ($U_A$) up to a maximum value (208) when in a second situation (212) the output voltage ($U_A$) corresponds to the input voltage ($U_E$); and to decrease, starting from the second situation (212), the first duty cycle ($D_1$) to a lesser extent at an increasing output voltage ($U_A$) than at a decreasing output voltage ($U_A$);
   wherein the control unit (112) for adapting the second duty cycle ($D_2$) is further configured to decrease, starting from a third situation (216) where the output voltage ($U_A$) is greater than the input voltage ($U_E$), the second duty cycle ($D_2$) at a decreasing output voltage ($U_A$) up to a minimum value (218) when in a second situation (212) the output voltage ($U_A$) corresponds to the input voltage ($U_E$); and to increase, starting from the second situation (212), the second duty cycle ($D_2$) to a lesser extent at a decreasing output voltage ($U_A$) than at an increasing output voltage ($U_A$);

wherein the control unit (112) for adapting the switching frequency (f) is further configured to increase, starting from the second situation (212) where the output voltage ($U_A$) corresponds to the input voltage ($U_A$), the switching frequency (f) at a decreasing or increasing output voltage ($U_A$) until the output voltage ($U_A$) has reached a reference value (202a-c, 204a-e) and to reduce the switching frequency (f) when the output voltage ($U_A$) has exceeded the reference value (202a-c, 204a-e);

wherein the control unit (112) for adapting the time delay ($t_v$) is further configured to determine the time delay ($t_v$) in a range between 0 and a time difference ($t_{S1}$-$t_{S4}$) between a first time period ($t_{S1}$) where the first switch ($S_1$) is switched on within a period duration (T) and a second time period ($t_{S4}$) where the fourth switch $S_4$ is switched on within the period duration (T), in dependence on an output current ($I_A$) of the switching DC-DC converter (120); and to increase the time delay ($t_v$) at a negative output current ($I_A$) of the switching DC-DC converter (120) when the amount of the output current ($I_A$) increases and to reduce the time delay ($t_v$) at a positive output current ($I_A$) of the switching DC-DC converter (120) when the amount of the output current ($I_A$) increases; or

wherein the time delay ($t_v$) can be represented as $t_v = aT$, wherein $t_v$ is the time delay, $\alpha$ a time delay factor and T a period duration of a switching cycle of the switches ($S_1$-$S_4$) of the switching DC-DC converter (120), and wherein the control unit (112) for adapting the time delay ($t_v$) is further configured to reduce an amount value of the time delay factor (a) at an increasing or decreasing output voltage ($U_A$), starting from a range (222a-e) of the output voltage ($U_A$) that includes a second situation (212) where the output voltage ($U_A$) corresponds to the input voltage ($U_E$) to determine the amount value of the time delay factor ($\alpha$) in a range between 0 and 1; and to switch on the first switch ($S_1$) at a positive output current ($I_A$) of the switching DC-DC converter (120) while the fourth switch ($S_4$) is switched on and to reduce an amount of the time delay ($t_v$) when the amount of the output current ($I_A$) increases and wherein the control unit (112) is configured to switch on the fourth switch ($S_4$) at a negative output current ($I_A$) of the switching DC-DC converter (120) while the first switch ($S_1$) is switched on and to increase the amount of the time delay ($t_v$) when the amount of the output current ($I_A$) increases.

2. Apparatus according to claim 1, wherein the control unit (112) is configured to switch on the first switch ($S_1$), the second switch ($S_2$), the third switch ($S_3$) and the fourth switch ($S_4$) with differing time durations ($t_{S1}$, $t_{S2}$, $t_{S3}$, $t_{S4}$).

3. Apparatus according to claim 1 or 2, wherein the control unit (112) is configured to switch on the fourth switch ($S_4$) only in time intervals ($t_{S4}$) in which the first switch ($S_1$) is switched on.

4. Apparatus according to one of the preceding claims, wherein the control unit (112) is configured to determine the first duty cycle ($D_1$) and the second duty cycle ($D_2$) such that the following condition is fulfilled for the first duty cycle ($D_1$) and for the second duty cycle ($D_2$);

$$\frac{U_A}{U_E} = \frac{D_1}{1 - D_2}$$

wherein $U_A$ describes the output voltage, $U_E$ the input voltage, $D_1$ the first duty cycle and $D_2$ the second duty cycle.

5. Apparatus according to one of the preceding claims, wherein the control unit (112) is configured to control the switches ($S_1$-$S_4$) of the switching DC-DC converter (120) such that the second switch ($S_2$) is always switched off when the fourth switch ($S_4$) is switched on.

6. Apparatus according to one of claims 1 to 4, wherein the control unit (112) is configured to determine the first duty cycle ($D_1$) and the second duty cycle ($D_2$) such that the first duty cycle ($D_1$) corresponds to the second duty cycle ($D_2$) in each operating point of the switched DC-DC converter.

7. Apparatus according to one of the preceding claims, wherein the control unit (112) is configured to determine the switching frequency (f) in dependence on the input voltage ($U_E$).

8. Apparatus according to one of the preceding claims, wherein the control unit (112) is configured to reduce the switching frequency (f) at an increase of an amount of an output current ($I_A$) of the switching DC-DC converter (120).

9. Apparatus according to one of the preceding claims with a storage where the values for the switching frequency (f), the first ($D_1$) and the second duty cycle ($D_2$) and the time delay ($t_v$) in dependence on the output voltage ($U_A$) and the input voltage ($U_E$) are stored, wherein the control unit (112) is configured to adapt the switching frequency (f),

the first ($D_1$) and the second duty cycle ($D_2$) and the time delay ($t_v$) based on the stored values.

10. Switching DC-DC converter (100) comprising
a first half-bridge circuit (130) including a first switch ($S_1$) and a second switch ($S_2$),
a second half-bridge circuit (140) including a third switch ($S_3$) and a fourth switch ($S_4$),
an inductance (L, 122) that is connected between the center taps (132, 142) of the first (130) and the second (140) half-bridge circuit; and
a control unit (110) according to claim 1.

11. Switching DC-DC converter according to claim 10, wherein the control unit (110) is configured to switch on the fourth switch ($S_4$) only in time intervals ($t_{S4}$) in which the first switch ($S_1$) is switched on.

12. Switching DC-DC converter according to claim 10, comprising a storage (114) where values for the switching frequency (f), the first ($D_1$) and second duty cycle ($D_2$) and the time delay ($t_v$) in dependence on the output voltage ($U_A$) and the input voltage ($U_E$) are stored.

13. Method for controlling a switched DC-DC converter (100; 120) comprising:

connecting a control unit (110) and a switching DC-DC converter (120) with a first half-bridge circuit (130) including a first switch ($S_1$) and a second switch ($S_2$), with a second half-bridge circuit (140) including a third switch ($S_3$) and a fourth switch ($S_4$), and an inductance (L, 122) that is connected between the center taps (132, 142) of the first (130) and the second (140) half-bridge circuit;
adapting a switching frequency (f) of the switches ($S_1$-$S_4$) of the DC-DC converter (120), the duty cycles ($D_1$, $D_2$) of the first ($S_1$) and fourth ($S_4$) switch and the time delay ($t_v$) between switching on the first ($S_1$) and fourth ($S_4$) switch in dependence on an input voltage ($U_E$) and an output voltage ($U_A$) at the switching DC-DC converter (120);
wherein adapting the switching frequency (f), the first duty cycle ($D_1$), the second duty cycle ($D_2$) and the time delay ($t_v$) is performed based on an output current ($I_A$) of the switching DC-DC converter (120);
**characterized in that**
for adapting the first duty cycle ($D_1$), starting from a first situation (206) where the output voltage ($U_A$) is lower than the input voltage ($U_E$), increasing the first duty cycle ($D_1$) at an increasing output voltage ($U_A$) up to a maximum value (208) when in a second situation (212) the output voltage ($U_A$) corresponds to the input voltage ($U_E$); and decreasing, starting from the second situation (212), the first duty cycle ($D_1$) to a lesser extent at an increasing output voltage ($U_A$) than at a decreasing output voltage ($U_A$);
for adapting the second duty cycle ($D_2$), starting from a third situation (216) where the output voltage ($U_A$) is greater than the input voltage ($U_E$), decreasing the second duty cycle ($D_2$) at a decreasing output voltage ($U_A$) up to a minimum value (218) when in a second situation (212) the output voltage ($U_A$) corresponds to the input voltage ($U_E$); and increasing, starting from the second situation (212), the second duty cycle ($D_2$) to a lesser extent at a decreasing output voltage ($U_A$) than at an increasing output voltage ($U_A$);
for adapting the switching frequency (f), starting from the second situation (212) where the output voltage ($U_A$) corresponds to the input voltage ($U_A$), increasing the switching frequency (f) at a decreasing or increasing output voltage ($U_A$) until the output voltage ($U_A$) has reached a reference value (202a-c, 204a-e) and reducing the switching frequency (f) when the output voltage ($U_A$) has exceeded the reference value (202a-c, 204a-e);
for adapting the time delay ($t_v$), determining the time delay ($t_v$) in a range between 0 and a time difference ($t_{S1}$-$t_{S4}$) between a first time period ($t_{S1}$) where the first switch ($S_1$) is switched on within a period duration (T) and a second time period ($t_{S4}$) where the fourth switch $S_4$ is switched on within the period duration (T), in dependence on an output current ($I_A$) of the switching DC-DC converter (120); and increasing the time delay ($t_v$) at a negative output current ($I_A$) of the switching DC-DC converter (120) when the amount of the output current ($I_A$) increases and reducing the time delay ($t_v$) at a positive output current ($I_A$) of the switching DC-DC converter (120) when the amount of the output current ($I_A$) increases; or
wherein the time delay ($t_v$) can be represented as $t_v = aT$, wherein $t_v$ is the time delay, $\alpha$ a time delay factor and T a period duration of a switching cycle of the switches ($S_1$-$S_4$) of the switching DC-DC converter (120), and wherein for adapting the time delay ($t_v$), reducing an amount value of the time delay factor (a) at an increasing or decreasing output voltage ($U_A$), starting from a range (222a-e) of the output voltage ($U_A$) that includes a second situation (212) where the output voltage ($U_A$) corresponds to the input voltage ($U_E$); determining the amount value of the time delay factor (a) in a range between 0 and 1; and switching on the first switch ($S_1$) at a positive output current ($I_A$) of the switching DC-DC converter (120) while the fourth switch ($S_4$) is switched on and reducing an amount of the time delay ($t_v$) when the amount of the output current ($I_A$) increases and switching on the fourth switch (S₄) at a negative output current (I_A) of the switching DC-DC converter (120) while the first switch (S₁) is switched on and increasing the amount of the time delay (t_v) when the amount of the output current (I_A) increases.

**Revendications**

1. Dispositif (110) de commande d'un convertisseur de tension continue à découpage (120) avec un premier circuit en demi-pont (130) comportant un premier commutateur (S₁) et un deuxième commutateur (S₂), avec un deuxième circuit en demi-pont (140) comportant un troisième commutateur (S₃) et un quatrième commutateur (S₄) et une inductance (L, 122) connectée entre les points centraux (132, 142) du premier et du deuxième circuit en demi-pont (130, 140) et comportant:

   une unité de commande (112) conçue pour adapter, en fonction d'une tension d'entrée (U_E) et d'une tension de sortie (U_A) au convertisseur de tension continue à découpage (120), une fréquence de commutation (f) des commutateurs (S₁ à S₄) du convertisseur de tension continue (120), un premier (D₁) et un deuxième (D₂) rapport cyclique du premier (S₁) et du quatrième (S₄) commutateur et le décalage de temps (t_v) entre l'activation du premier (S₁) et du quatrième (S₄) commutateur;
   dans lequel l'unité de commande (112) est par ailleurs conçue pour déterminer la fréquence de commutation (f), le premier rapport cyclique (D₁), le deuxième rapport cyclique (D₂) et le décalage de temps (t_v) sur base d'un courant de sortie (I_A) du convertisseur de tension continue à découpage (120);
   **caractérisé par le fait que**
   l'unité de commande (112), pour adapter le premier rapport cyclique (D₁), est par ailleurs configurée pour augmenter, en partant d'une première situation (206) dans laquelle la tension de sortie (U_A) est inférieure à la tension d'entrée (U_E), le premier rapport cyclique (D₁) en cas de tension de sortie (U_A) croissante jusqu'à une valeur maximale (208) lorsque, dans une deuxième situation (212), la tension de sortie (U_A) correspond à la tension d'entrée (U_E); et pour diminuer, en partant de la deuxième situation (212) en cas de tension de sortie (U_A) croissante, le premier rapport cyclique (D₁) moins fortement qu'en cas de tension de sortie (U_A) décroissante;
   dans lequel l'unité de commande (112), pour adapter le deuxième rapport cyclique (D₂), est par ailleurs conçue pour diminuer, en partant d'une troisième situation (216) dans laquelle la tension de sortie (U_A) est supérieure à la tension d'entrée (U_E), le deuxième rapport cyclique (D₂) en cas de tension de sortie décroissante (U_A) jusqu'à une valeur minimale (218) lorsque, dans une deuxième situation (212), la tension de sortie (U_A) correspond à la tension d'entrée (U_E); et pour augmenter, en partant de la deuxième situation (212) en cas de tension de sortie décroissante (U_A), moins fortement le deuxième rapport cyclique (D₂) qu'en cas de tension de sortie croissante (U_A);
   dans lequel l'unité de commande (112), pour adapter la fréquence de commutation (f), est par ailleurs conçue pour augmenter, en partant de la deuxième situation (212) dans laquelle la tension de sortie (U_A) correspond à la tension d'entrée (U_E), en cas de tension de sortie (U_A) décroissante ou croissante, la fréquence de commutation (f) jusqu'à ce que la tension de sortie (U_A) ait atteint une valeur de référence (202a à c, 204a à e), et pour réduire la fréquence de commutation (f) lorsque la tension de sortie (U_A) a excédé la valeur de référence (202a à c, 204a à e);
   dans lequel l'unité de commande (112), pour adapter le décalage de temps (t_v), est par ailleurs conçue pour déterminer le décalage de temps (t_v) dans une plage comprise entre 0 et une différence de temps (ts₁ à ts₄) entre un premier laps de temps (tsi) pendant lequel le premier commutateur (S₁) est activé pendant une période (T) et un deuxième laps de temps (t_{S4}) pendant lequel le quatrième commutateur (S₄) est activé pendant la période (T) en fonction d'un courant de sortie (I_A) du convertisseur de tension continue à découpage (120); et pour augmenter, en cas de courant de sortie négatif (I_A) du convertisseur de tension continue à découpage (120), le décalage de temps (t_v) lorsque la quantité du courant de sortie (I_A) augmente et pour réduire, en cas de courant de sortie positif (I_A) du convertisseur de tension continue à découpage (120), le décalage de temps (t_v) lorsque la quantité du courant de sortie (I_A) augmente; ou
   dans lequel le décalage de temps (t_v) peut être représenté par $t_v = \alpha T$, où $t_v$ est le décalage de temps, $\alpha$ est un facteur de décalage de temps et T est une période d'un cycle de commutation des commutateurs (S₁ à S₄) du convertisseur de tension continue à découpage (120), et dans lequel l'unité de commande (112), pour adapter le décalage de temps (t_v), est par ailleurs conçue pour réduire, en partant d'une plage (222a à e) de la tension de sortie (U_A) qui comporte une deuxième situation (212) dans laquelle la tension de sortie (U_A) correspond à la tension d'entrée (U_E), en cas de tension de sortie (U_A) croissante ou décroissante, une valeur de quantité du facteur de décalage de temps (a) pour déterminer la valeur de quantité du facteur de décalage de temps

($\alpha$) dans une plage comprise entre 0 et 1; et pour activer, en cas de courant de sortie positif ($I_A$) du convertisseur de tension continue à découpage (120), le premier commutateur ($S_1$) tandis que le quatrième commutateur ($S_4$) est activé, et pour réduire une quantité du décalage de temps ($t_v$) lorsque la quantité du courant de sortie ($I_A$) augmente, et dans lequel l'unité de commande (112) est conçue pour activer, en cas de courant de sortie négatif ($I_A$) du convertisseur de tension continue à découpage (120), le quatrième commutateur ($S_4$) tandis que le premier commutateur ($S_4$) est activé, et pour augmenter la quantité du décalage de temps ($t_v$) lorsque la quantité du courant de sortie ($I_A$) augmente.

2. Dispositif selon la revendication 1, dans lequel l'unité de commande (112) est conçue pour activer le premier commutateur ($S_1$), le deuxième commutateur ($S_2$), le troisième commutateur ($S_3$) et le quatrième commutateur ($S_4$) pendant des périodes de temps différentes l'une de l'autre ($ts_1$, $ts_2$, $ts_3$, $ts_4$).

3. Dispositif selon la revendication 1 ou 2, dans lequel l'unité de commande (112) est conçue pour activer le quatrième commutateur ($S_4$) uniquement à des intervalles de temps ($ts_4$) dans lesquels le premier commutateur ($S_1$) est activé.

4. Dispositif selon l'une des revendications précédentes, dans lequel l'unité de commande (112) est conçue pour déterminer le premier rapport cyclique ($D_1$) et le deuxième rapport cyclique ($D_2$) de sorte que pour le premier rapport cyclique ($D_1$) et pour le deuxième rapport cyclique ($D_2$) soit remplie la condition suivante:

$$\frac{U_A}{U_E} = \frac{D_1}{1 - D_2}$$

où $U_A$ décrit la tension de sortie, $U_E$ la tension d'entrée, $D_1$ le premier rapport cyclique et $D_2$ le deuxième rapport cyclique.

5. Dispositif selon l'une des revendications précédentes, dans lequel l'unité de commande (112) est conçue pour activer les commutateurs ($S_1$ à $S_4$) du convertisseur de tension continue à découpage (120) de sorte que le deuxième commutateur ($S_2$) soit toujours désactivé lorsque le quatrième commutateur ($S_4$) est activé.

6. Dispositif selon l'une des revendications 1 à 4, dans lequel l'unité de commande (112) est conçue pour déterminer le premier rapport cyclique ($D_1$) et le deuxième rapport cyclique ($D_2$) de sorte que le premier rapport cyclique ($D_1$) corresponde à chaque point de fonctionnement du convertisseur de tension commuté au deuxième rapport cyclique ($D_2$).

7. Dispositif selon l'une des revendications précédentes, dans lequel l'unité de commande (112) est conçue pour déterminer la fréquence de commutation (f) en fonction de la tension d'entrée ($U_E$).

8. Dispositif selon l'une des revendications précédentes, dans lequel l'unité de commande (112) est conçue pour réduire la fréquence de commutation (f) en cas d'augmentation d'une quantité de courant de sortie ($I_A$) du convertisseur de tension continue à découpage (120).

9. Dispositif selon l'une des revendications précédentes, avec une mémoire dans laquelle sont mémorisées les valeurs pour la fréquence de commutation (f), le premier ($D_1$) et le deuxième ($D_2$) rapport cyclique et le décalage de temps ($t_v$) en fonction de la tension de sortie ($U_A$) et de la tension d'entrée ($U_E$), dans lequel l'unité de commande (112) est conçue pour ajuster la fréquence de commutation (f), le premier ($D_1$) et le deuxième ($D_2$) rapport cyclique et le décalage de temps ($t_v$) en fonction des valeurs mémorisées.

10. Convertisseur de tension continue à découpage (100), avec
un premier circuit en demi-pont (130) comportant un premier commutateur (S1) et un deuxième commutateur ($S_2$),
un deuxième circuit en demi-pont (140) comportant un troisième commutateur (S3) et un quatrième commutateur ($S_4$),
une inductance (L, 122) connectée entre les points centraux (132, 142) du premier (130) et du deuxième (140) circuit en demi-pont; et
une unité de commande (110) selon la revendication 1.

11. Convertisseur de tension continue à découpage selon la revendication 10, dans lequel l'unité de commande (110) est conçue pour activer le quatrième commutateur ($S_4$) uniquement à des intervalles de temps ($t_{s4}$) dans lesquels

le premier commutateur ($S_1$) est activé.

12. Convertisseur de tension continue à découpage selon la revendication 10, présentant une mémoire (114) dans laquelle sont mémorisées les valeurs pour la fréquence de commutation (f), le premier ($D_1$) et le deuxième ($D_2$) rapport cyclique et le décalage de temps ($t_v$) en fonction de la tension de sortie ($U_A$) et de la tension d'entrée ($U_E$) .

13. Procédé de commande d'un convertisseur de tension continue à découpage (100; 120), aux étapes suivantes consistant à:

connecter une unité de commande (110) et un convertisseur de tension continue à découpage (120) avec un premier circuit en demi-pont (130) comportant un premier commutateur ($S_1$) et un deuxième commutateur ($S_2$), avec un deuxième circuit en demi-pont (140) comportant un troisième commutateur ($S_3$) et un quatrième commutateur ($S_4$), et une inductance (L, 122) connectée entre les points centraux (132, 142) du premier (130) et du deuxième (140) circuit en demi-pont;

adapter une fréquence de commutation (f) des commutateurs ($S_1$ à $S_4$) du convertisseur de tension continue à découpage (120), des rapports cycliques ($D_1$, $D_2$) du premier ($S_1$) et du quatrième ($S_4$) commutateur et le décalage de temps ($t_v$) entre l'activation du premier ($S_1$) et du quatrième ($S_4$) commutateur en fonction d'une tension d'entrée ($U_E$) et d'une tension de sortie ($U_A$) au convertisseur de tension continue à découpage (120); dans lequel l'adaptation de la fréquence de commutation (f), du premier rapport cyclique ($D_1$), du deuxième rapport cyclique ($D_2$) et du décalage de temps ($t_v$) est effectuée sur base d'un courant de sortie ($I_A$) du convertisseur de tension continue à découpage (120);

**caractérisé par le fait que**

pour adapter le premier rapport cyclique ($D_1$), en partant d'une première situation (206) dans lequel la tension de sortie ($U_A$) est inférieure à la tension d'entrée ($U_E$), le premier rapport cyclique ($D_1$) est augmenté en cas de tension de sortie ($U_A$) croissante jusqu'à une valeur maximale (208) lorsque, dans une deuxième situation (212), la tension de sortie ($U_A$) correspond à la tension d'entrée ($U_E$); et en partant de la deuxième situation (212), en cas de tension de sortie croissante ($U_A$), le premier rapport cyclique ($D_1$) est diminué moins fortement qu'en cas de tension de sortie ($U_A$) décroissante;

pour adapter le deuxième rapport cyclique ($D_2$), en partant d'une troisième situation (216) dans laquelle la tension de sortie ($U_A$) est supérieure à la tension d'entrée ($U_E$), le deuxième rapport cyclique ($D_2$) est diminué en cas de tension de sortie décroissante ($U_A$) jusqu'à une valeur minimale (218) lorsque, dans une deuxième situation (212), la tension de sortie ($U_A$) correspond à la tension d'entrée ($U_E$) et, en partant de la deuxième situation (212) en cas de tension de sortie décroissante ($U_A$), le deuxième rapport cyclique ($D_2$) est augmenté moins fortement qu'en cas de tension de sortie croissante ($U_A$);

pour adapter la fréquence de commutation (f), en partant de la deuxième situation (212) dans laquelle la tension de sortie ($U_A$) correspond à la tension d'entrée ($U_E$), en cas de tension de sortie décroissante ou croissante ($U_A$), la fréquence de commutation (f) est augmentée jusqu'à ce que la tension de sortie ($U_A$) ait atteint une valeur de référence (202a à c, 204a à e) et la fréquence de commutation (f) est réduite lorsque la tension de sortie ($U_A$) a excédé la valeur de référence (202a à c, 204a à e);

pour adapter le décalage de temps ($t_v$), déterminer le décalage de temps (tv) dans une plage comprise entre 0 et une différence de temps ($ts_1$ à $ts_4$) entre un premier laps de temps (tsi) pendant lequel le premier commutateur ($S_1$) est activé pendant une période (T) et un deuxième laps de temps ($t_{S4}$) pendant lequel le quatrième commutateur ($S_4$) est activé pendant la période (T), en fonction d'un courant de sortie ($I_A$) du convertisseur de tension continue à découpage (120); et, en cas de courant de sortie négatif ($I_A$) du convertisseur de tension continue à découpage (120), augmenter le décalage de temps ($t_v$) lorsque la quantité du courant de sortie ($I_A$) augmente et, en cas de courant de sortie positif ($I_A$) du convertisseur de tension continue à découpage (120), réduire le décalage de temps ($_tv$) lorsque la quantité du courant de sortie ($I_A$) augmente; ou

dans lequel le décalage de temps ($t_v$) peut être représenté par $t_v = \alpha T$, où $t_v$ est le décalage de temps, $\alpha$ est un facteur de décalage de temps et T est une période d'un cycle de commutation des commutateurs ($S_1$ à $S_4$) du convertisseur de tension continue à découpage (120), et dans lequel, pour adapter le décalage de temps ($t_v$), en partant d'une plage (222a à e) de la tension de sortie ($U_A$) qui comporte une deuxième situation (212) dans laquelle la tension de sortie ($U_A$) correspond à la tension d'entrée ($U_E$), en cas de tension de sortie ($U_A$) croissante ou décroissante, réduire une valeur de quantité du facteur de décalage de temps ($\alpha$); déterminer la valeur de quantité du facteur de décalage de temps (a) dans une plage comprise entre 0 et 1; et, en cas de courant de sortie positif ($I_A$) du convertisseur de tension continue à découpage (120), activer le premier commutateur ($S_1$) tandis que le quatrième commutateur ($S_4$) est activé, et réduire une quantité du décalage de temps ($t_v$) lorsque la quantité du courant de sortie ($I_A$) augmente, et, en cas de courant de sortie négatif ($I_A$) du convertisseur de tension continue à découpage (120), activer le quatrième commutateur ($S_4$) tandis que le

premier commutateur (S4) est activé, et augmenter la quantité du décalage de temps ($t_v$) lorsque la quantité du courant de sortie ($I_A$) augmente.

FIG 1

EP 3 347 978 B1

FIG 2

EP 3 347 978 B1

FIG 3A

PWM1H: $S_1$    PWM1L: $S_2$

FIG 3B

PWM2H: $S_4$    PWM2L: $S_3$

FIG 3C

$u_L$    $u_E$
$U_E - U_A$
$-U_A$

FIG 3D

$i_L$

FIG 3E

$u_{DS2}$    $u_{DS1}$
$U_E$
0

FIG 3F

$u_{DS3}$    $u_{DS4}$
$U_A$
0

FIG 4C

$t_4 < t < t_5$

FIG 4B

$t_3 < t < t_4$

FIG 4A

$t_2 < t < t_3$

$t_8 < t < t_9$

FIG 4F

$t_7 < t < t_8$

FIG 4E

$t_6 < t < t_7$

FIG 4D

32

EP 3 347 978 B1

$t_9 < t < t_{10}$

FIG 4G

$t_{10} < t < t_{11}$

FIG 4H

$t_{11} < t < t_{12}$

FIG 4I

EP 3 347 978 B1

$t_{13} < t < t_{14}$

$t_{14} < t < t_1'$

$t_1' < t < t_2'$

FIG 4J

FIG 4K

FIG 4L

FIG 5A

PWM1H: S₁   PWM1L: S₂

FIG 5B

PWM2H: S₄   PWM2L: S₃

FIG 5C

FIG 5D

FIG 6A

FIG 6B

FIG 6C

EP 3 347 978 B1

FIG 7A        FIG 7B        FIG 7C

EP 3 347 978 B1

FIG 8A

FIG 8B

FIG 8C

EP 3 347 978 B1

FIG 9A   FIG 9B   FIG 9C

FIG 10

FIG 11

FIG 12A      FIG 12B      FIG 12C

EP 3 347 978 B1

EP 3 347 978 B1

$U_E{=}300V$

$U_E{=}400V$

$U_E{=}500V$

① —————— $I_A{=}{-}5A$
② ·············· $I_A{=}{-}4A$
③ ———— $I_A{=}{-}3A$
④ —·—·— $I_A{=}{-}2A$
⑤ — — — $I_A{=}{-}1A$

$\eta/\%$

$U_A/V$

$U_A/V$

$U_A/V$

**FIG 13A**

**FIG 13B**

**FIG 13C**

$U_E = 400V; \quad I_A = 3A$

FIG 14

FIG 15A

$I_A > 0$

PWM1H: $S_1$    PWM1L: $S_2$

$t_{S1}$  $t_{tot1}$  $t_{S2}$  $t_{tot2}$

T

PWM2H: $S_4$    PWM2L: $S_3$

$t_{S4}$  $t_{tot4}$  $t_{S3}$  $t_{tot3}$

$t_v$

$t_i$    0

EP 3 347 978 B1

$I_A < 0$

PWM1H: $S_1$        PWM1L: $S_2$

t

$t_{S1}$        $t_{tot1}$        $t_{S2}$        $t_{tot2}$

T

PWM2L: $S_3$        PWM2H: $S_4$

t

$t_{S3}$        $t_{tot3}$        $t_{S4}$        $t_{tot4}$

$t_v$

0        $t_i$

# FIG 15B

FIG 16A

FIG 16B

FIG 16C

EP 3 347 978 B1

FIG 17A   FIG 17B   FIG 17C

FIG 18A  FIG 18B  FIG 18C

EP 3 347 978 B1

**FIG 19A**  **FIG 19B**  **FIG 19C**

FIG 20A    FIG 20B    FIG 20C

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6166527 A
- US 20120146594 A1